(19) **Europäisches Patentamt / European Patent Office / Office européen des brevets**

(11) **EP 3 566 326 B1**

(12) # EUROPEAN PATENT SPECIFICATION

(45) Date of publication and mention
of the grant of the patent:
**04.03.2026 Bulletin 2026/10**

(21) Application number: **17890227.6**

(22) Date of filing: **03.01.2017**

(51) International Patent Classification (IPC):
*H04B 7/0452* (2017.01)    *H04B 7/0417* (2017.01)
*H04B 17/309* (2015.01)    *H04B 17/373* (2015.01)
*H04L 27/26* (2006.01)    *H04L 25/02* (2006.01)

(52) Cooperative Patent Classification (CPC):
**H04B 7/0452; H04B 17/373; H04L 25/0204;
H04L 25/0232; H04L 25/024; H04L 27/2639;
H04L 27/2647; H04L 27/2662;** H04B 17/309;
H04L 27/2613; H04L 27/2672

(86) International application number:
**PCT/AU2017/050001**

(87) International publication number:
**WO 2018/126291 (12.07.2018 Gazette 2018/28)**

(54) **METHOD AND DEVICE FOR IMPROVING CHANNEL ESTIMATION IN A MULTI-USER MIMO-OFDM SYSTEM**

VERFAHREN UND EINRICHTUNG ZUR VERBESSERUNG EINER KANALSCHÄTZUNG IN EINEM MEHRBENUTZER-MIMO-OFDM-SYSTEM

PROCÉDÉ ET APPAREIL POUR AMÉLIORER UNE ESTIMATION DE CANAL DANS UN SYSTÈME MIMO-OFDM MULTI-UTILISATEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.11.2019 Bulletin 2019/46**

(73) Proprietor: **Commonwealth Scientific and Industrial
Research Organisation
Acton, Australian Capital Territory 2601 (AU)**

(72) Inventors:
• **SUNG, Chang Kyung**
  **Tornleigh, New South Wales 2120 (AU)**
• **KENDALL, Rodney**
  **Cherrybrook, New South Wales 2126 (AU)**
• **HUMPHREY, David Eric**
  **Carlingford, New South Wales 2118 (AU)**
• **SUZUKI, Hajime**
  **Chatswood, New South Wales 2067 (AU)**

(74) Representative: **Gill Jennings & Every LLP
The Broadgate Tower
20 Primrose Street
London EC2A 2ES (GB)**

(56) References cited:
WO-A1-2014/171551    WO-A1-2016/064901
WO-A1-2016/064901    WO-A1-2017/008121
WO-A1-2017/008121    US-A1- 2009 274 220
US-A1- 2013 177 092    US-A1- 2013 329 645
US-B2- 8 020 075    US-B2- 8 938 015
US-B2- 8 938 015

• **ERIK LINDEN: "Iterative Channel Estimation in
LTE Uplink", MASTER'S DEGREE PROJECT,
STOCKHOLM, 1 January 2014 (2014-01-01),
Sweden, pages 1 - 65, XP055511242, Retrieved
from the Internet <URL:http://www.diva-portal.
org/smash/get/diva2:727685/FULLTEXT01.pdf>
[retrieved on 20181001]**

**(Cont. next page)**

- SPENCER, Q. H. ET AL.: "Zero-Forcing Methods for Downlink Spatial Multiplexing in Multi-User MIMO Channels", vol. 52, no. 2, 2 May 2003 (2003-05-02), pages 1 - 27, XP011105731, Retrieved from the Internet <URL:http://citeseerx.ist.psu.edu/viewdoc/download?doi=10.1.1.4.6708&rep=rep1&type=pdf> [retrieved on 20170322]

- LINDEN, E.: "Iterative Channel Estimation in LTE Uplink", MASTER'S DEGREE PROJECT, STOCKHOLM, 2014, Sweden, pages 1 - 65, XP055511242, Retrieved from the Internet <URL:http://www.diva-portal.se/smash/get/diva2:727685/FULLTEXT01.pdf> [retrieved on 20170322]

## Description

### Field of Invention

The present invention relates generally to wireless communication and, in particular, to multi-user multiple-input multiple-output orthogonal frequency division multiplexing (MU-MIMO-OFDM) wireless communication systems.

### Background

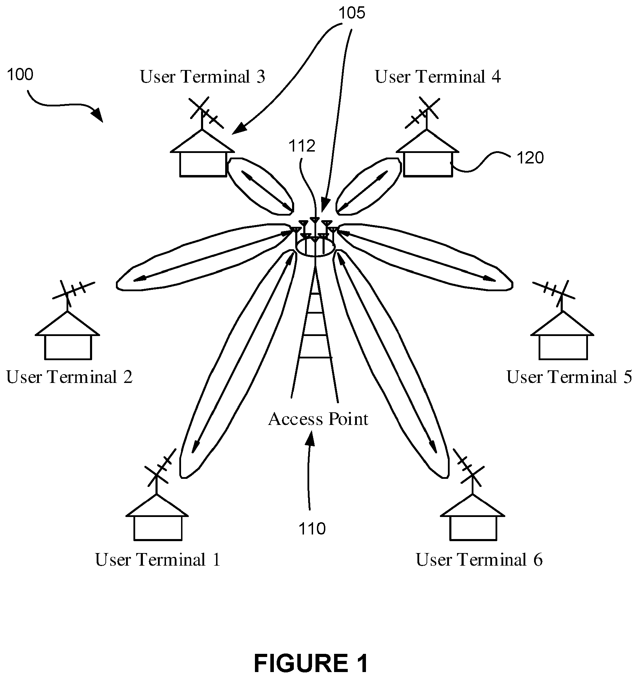

The use of multi-user multiple-input multiple-output orthogonal frequency division multiplexing (MU-MIMO-OFDM) has been considered for next-generation wireless systems. Figure 1 shows an example of MU-MIMO-OFDM system where the central access point (AP), equipped with $N_{AP}$ antennas, communicates with $N_{UT}$ user terminals (UTs), each equipped with a single antenna. Wireless OFDM links between the AP and the UTs can be established at the same time using the same radio frequency, improving the spectrum efficiency of the system, ideally, by the minimum of $N_{AP}$ and $N_{UT}$, compared to a conventional single-transmitter-single-receiver system. This mode of operation is also known as space division multiple access (SDMA). Uplink MU-MIMO-OFDM transmission (from UTs to AP) can be realised by the AP receiver having an accurate knowledge of the uplink channel. Downlink MU-MIMO-OFDM transmission (from AP to UTs) can be realised by the AP transmitter having an accurate knowledge of the downlink channel.

One of the challenges to realise a successful implementation of a MU-MIMO-OFDM system achieving higher spectrum efficiency is to have an efficient and accurate channel estimation method. Basically, channel estimation errors degrade achievable signal to noise plus interference ratio (SNIR), both for uplink and downlink, which in turn degrades achievable data transfer rates.

Accurate estimation of OFDM channel is typically performed by sending symbols known by the receiver in advance. Such symbols known by the receiver in advance for the purpose of channel estimation are referred as channel training symbols. The longer the time the system spends sending known symbols for channel estimation, the shorter the time the system can spend for sending information. The time that the system spends for channel estimation is referred as channel training overheads. Typically, the channel training overheads increases with the number of transmitters, as the estimation of the channel is required for each active transmitter. A method for efficiently and accurately estimating channels in the presence of a large number of transmitters is called for.

One known method for performing channel estimation is to use comb-pilot sub-carriers with phase slope estimation in the presence of OFDM frame timing offset. Generally, conventional channel estimation methods that use comb-pilot sub-carriers estimate the channel coefficients at comb-pilot sub-carriers and then compute the channel coefficients of the remaining sub-carriers by interpolating the estimated channel coefficients of the comb-pilot sub-carriers.

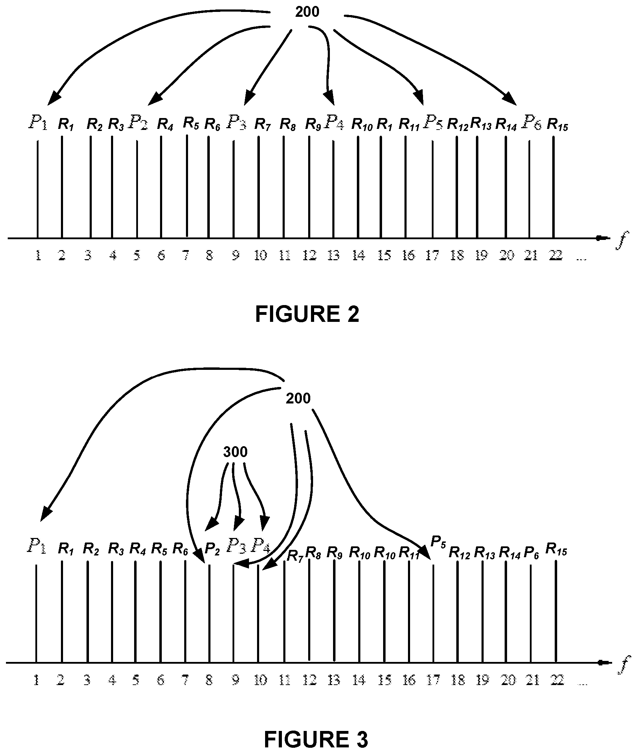

As shown in Figure 2, the conventional comb-pilot sub-carrier arrangement places comb-pilot sub-carriers uniformly along the frequency. This example shows an interpolation factor of 4 with equal spacing between comb-pilot sub-carriers. This conventional equally spaced arrangement was previously recommended in the absence of prior knowledge about the channel. This conventional equally spaced arrangement is also known to be beneficial in utilising certain types of interpolation methods, such as transform-domain processing. Previously, the phase slope of the channel coefficients along the frequency was estimated by the estimated channel coefficients of equally spaced comb-pilot sub-carriers, which inevitably has a larger variation due to the larger spacing of the comb-pilot sub-carriers.

The spectrum efficiency of an OFDM communication link improves by using less sub-carriers for pilot and more sub-carriers for transmitting data. The ratio of the number of comb-pilot sub-carriers over the number of all sub-carriers for which the channel coefficients are calculated by the interpolation is known as the interpolation factor. There is a trade-off between achieving higher spectrum efficiency and degradation in channel estimation accuracy by using a larger interpolation factor.

In practice OFDM frame timing offset causes fast phase changes in estimated channel coefficients of the comb-pilot sub-carriers, and results in significant error in estimating channel coefficients at remaining sub-carriers by interpolation. Previously proposed methods were found to work well up to the OFDM frame timing offset in terms of $N / (2\,F)$ baseband samples, where N is the number of baseband samples per OFDM frame and F is the interpolation factor.

However, currently there is no known method that can allow the OFDM frame timing offset larger than $N / (2\,F)$ without ambiguity.

Another of the challenges is to have an efficient and accurate channel state feedback method for a MU-MIMO-OFDM system. Generally, the access point is equipped with multiple transmitters communicating with multiple user terminals each having one or more receiving antennas. With the access point knowing the downlink channel coefficients, the spectrum efficiency of the multi-user MIMO downlink can increase linearly with the number of transmitters at the access point, provided sufficient number of users are present in the system.

In order to perform downlink MU-MIMO-OFDM, the access point transmitters need to know the downlink channel. The access point can identify the downlink channel by 1) estimating the downlink channel at each user terminal by sending channel training symbols in a first time period, and 2) receiving the estimated downlink channel information from each user terminal in a second time period. The longer the MU-MIMO-OFDM system spends sending estimated downlink channel information, the shorter the time the MU-MIMO-OFDM system can spend sending information. The time that system spends feeding back estimated channel information is referred as channel feedback overheads. Channel feedback overheads may be reduced if channel information is compressed with some loss of information, referred to as channel compression. Typically, the time required for the system to feedback the channel information increases with the number of transmitter, as the channel information is required for each active transmitter.

A number of well-known channel state feedback schemes have been previously investigated including analog feedback and vector quantisation. It has been concluded from these investigations that the most suitable method in terms of simplicity and overhead minimisation for multi-user MIMO-OFDM is to use time-domain quantisation. This has therefore lead to the use of discrete Fourier transform (DFT) based channel compression for the purposes of efficient channel feedback in multi-user MIMO-OFDM communication. DFT based channel compression has been shown to theoretically outperform other known channel compression methods. The use of DFT to transform frequency domain channel coefficients into time domain impulse response coefficients and the use of scalar uniform quantisation with some (unspecified) bit-allocation scheme was suggested to quantise the time domain impulse response real and imaginary coefficients. The method was shown to achieve better sum rates over previous methods analytically.

Anther particular challenge to realise a successful implementation of a MU-MIMO-OFDM systems is to reduce the required computational complexity. Zero-forcing detection and zero-forcing pre-coding are known as low complexity linear receiver and pre-coder for MU-MIMO-OFDM uplink and downlink. However, even with these linear low-complexity methods, the computational complexity required for zero-forcing based uplink and downlink MU-MIMO-OFDM can increase dramatically, as both methods involve inversion of a channel matrix, wherein the matrix size can become large with a large number of transmitters.

Interpolation of channel inverse in point-to-point MIMO-OFDM communication was proposed previously. In particular, the interpolation of channel inverse is achieved by performing interpolation separately of the adjoint and determinant of the channel matrix. This is expressed as follows:

$$\mathbf{H}^{-1}\left(i_{\mathrm{F}}\right) = \frac{\operatorname{adj} \mathbf{H}\left(i_{\mathrm{F}}\right)}{\det \mathbf{H}\left(i_{\mathrm{F}}\right)}$$

where H is the channel matrix. It was concluded that interpolating the channel matrix from a smaller set of inverses will, in general, not be possible.

A method for interpolation-based QR decomposition in MIMO-OFDM systems has also previously been proposed. This method is applicable to point-to-point MIMO channels as well as point-to-multipoint multi-user MIMO channel that requires per-tone QR decomposition. In this method, the interpolation is performed separately on Q (i.e. the orthogonal matrix) and R (i.e. the upper triangular matrix) matrices of the channel matrix.

WO2016064901A1 relates to methods for signal detection and transmission in MU-MIMO wireless communication systems, for multiple Us transmit uplink SRS to capture the uplink channel coefficients, and to estimate the frequency offsets and time offsets, for the BS estimating the channel coefficients of multiple Us with the received SRS, for the BS estimating the frequency offsets and time offsets of multiple Us with the estimated channel coefficients, for the BS modifying the estimated channel coefficients with the estimated frequency offsets and time offsets, for the BS calculating the detection matrices for the uplink MU-MIMO signal detection with the modified channel coefficients and for the BS calculating the precoding matrices for the downlink MU-MIMO signal transmission.

US8938015B2A discloses a system including a demodulator configured to receive an OFDM modulated signal over a channel, the signal including a sequence of symbols, each of the symbols including one or more pilot carriers and one or more data carriers; a time filtering and interpolation circuit coupled to the demodulator, the time filtering and interpolation circuit configured to estimate the frequency response of the channel based on time filtering and interpolation of the pilot carriers; a phase slope correction circuit configured to apply each of a plurality of phase slope corrections to the frequency response and to the data carriers; a frequency filtering and interpolation circuit configured to calculate frequency response estimates of the channel at data carrier frequencies based on frequency filtering and interpolation of the phase slope corrected frequency response; an equalization circuit configured to equalize the phase slope corrected data carriers based on the calculated frequency response estimates; an error calculation circuit configure to calculate the mean square error between the equalized data carriers and a nearest QAM constellation point; and an iterative phase slope optimization circuit configured to select the phase slope correction associated with the minimum of the mean square errors, wherein the selected phase slope resolves the cyclic ambiguity.

There is therefore a need to alleviate one or more of the above mentioned challenges or provide a useful alternative.

The reference in this specification to any prior publication (or information derived from it), or to any matter which is

## EP 3 566 326 B1

known, is not, and should not be taken as, an acknowledgement or admission or any form of suggestion that that prior publication (or information derived from it) or known matter forms part of the common general knowledge in the field of endeavour to which this specification relates.

### Summary

Aspects of the present invention discloses various improvements to multi-user multiple-input multiple-output orthogonal frequency division multiplexing (MU-MIMO-OFDM) wireless communication systems. In one aspect there is disclosed an efficient and accurate channel estimation method and system using locally consecutive pilot sub-carriers. In another aspect there is disclosed an efficient method and system to calculate channel inverse by direct interpolation. These aspects can be used separately or in combination to improve the MU-MIMO-OFDM system.
The invention is set out in the appended set of claims.
Other aspects and embodiments will be appreciated throughout the detailed description of the example embodiments.

### Description of Drawings

Example embodiments should become apparent from the following description, which is given by way of example only, of at least one preferred but non-limiting embodiment, described in connection with the accompanying figures.

Figure 1 is an example of MU-MIMO-OFDM system;

Figure 2 is an example of a conventional pilot sub-carrier arrangement;

Figure 3 is an example of a pilot sub-carrier arrangement including locally consecutive pilot sub-carriers;

Figure 4 is an example of a method performed by a receiving device for performing channel estimation;

Figure 5A is an example OFDM channel frequency response;

Figure 5B is an example of a comparison of channel estimation error results using conventional comb-pilot sub-carrier and locally consecutive pilot sub-carrier arrangements;

Figure 6 a flowchart representing an example method utilising locally consecutive sub-carriers for a MU-MIMO OFDM system;

Figures 7A and 7B are flow charts representing example methods of using DCT for channel compression for a MU-MIMO OFDM system;

Figure 8 is graph showing example channel feedback error results using DCT channel compression using uniform bit allocation;

Figure 9 is a graph showing example channel feedback error results using DFT channel compression, wherein the results are based on uniform bit allocation;

Figure 10 is graph showing example channel feedback error results using DCT channel compression methods, wherein bit allocation was based on maximum amplitude of coefficients;

Figure 11 is graph showing example channel feedback error results using DFT channel compression methods, wherein bit allocation was based on maximum amplitude of coefficients;

Figure 12 is a flowchart representing an example method performed by an access point of a MU-MIMO-OFDM system for uplink signal processing;

Figure 13 is a flowchart representing an example method performed by an access point of a MU-MIMO-OFDM system for downlink signal processing;

Figure 14 is an example of a uplink comb-pilot sub-carrier arrangement with locally consecutive pilot sub-carriers;

5

Figure 15 is a flowchart representing an example method of estimating channel coefficients and calculating the channel inversion for a MU-MIMO-OFDM system based on the example uplink comb-pilot sub-carrier arrangement of Figure 14;

Figure 16 is an example of a downlink comb-pilot sub-carrier arrangement with locally consecutive pilot sub-carriers;

Figure 17 is a flowchart representing an example method of estimating channel coefficients, compressing the estimate channel coefficients using DCT and calculating the channel inversion for a MU-MIMO-OFDM system based on the example downlink comb-pilot sub-carrier arrangement of Figure 16;

Figure 18 is a graph indicative of results of a simulation of a MU-MIMO-OFDM downlink of a MU-MIMO-OFDM system; and

Figures 19A and 19B collectively form a schematic block diagram representation of an example embedded electronic device which can be used as the access point and/or the user device.

**Detailed Description**

Where reference is made in any one or more of the accompanying drawings to steps and/or features, which have the same reference numerals, those steps and/or features have for the purposes of this description the same function(s) or operation(s), unless the contrary intention appears.

It will be appreciated that the term "channel inverse" refers to the pseudo inverse matrix of a channel matrix. Coherence of the channel matrix as a function of frequency is utilised to reduce the number of calculations performed to calculate the channel inverse. An initial portion of the channel inverse is calculated only at selected sub-carriers (herein referred to as the channel inverse sub-carriers) and a remaining portion of the channel inverse at remaining sub-carriers is calculated by some form of interpolation/extrapolation.

Referring to Figure 3 there is shown an example pilot sub-carrier arrangement including pilot sub-carriers 200 which in turn include locally consecutive pilot sub-carriers 300.

In this example, the location of the original comb-pilot sub-carriers $P_2$ and $P_4$ (relative to the conventional equally spaced arrangement depicted in Figure 2) are shifted to form locally consecutive pilot sub-carrier 300 around $P_3$. A locally consecutive pilot sub-carrier 300 is spaced more closely to another locally consecutive pilot sub-carrier 300 compared to another pilot sub-carrier 200 which is not a locally consecutive pilot sub-carrier.

Phase slope estimation are then performed by using the estimated channel coefficients at the locally consecutive pilot sub-carriers 300. Advantageously, the phase slope can be estimated without ambiguity up to $N/2$. Furthermore, spectrum efficiency is not compromised by allocating the same number of comb-pilot sub-carriers to that which is shown in Figure 2.

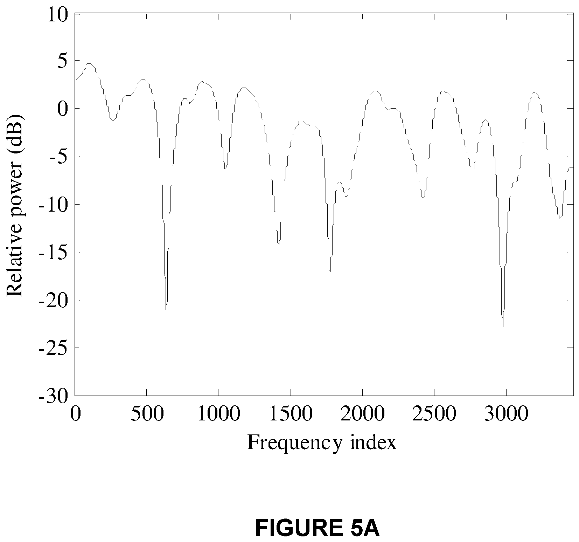

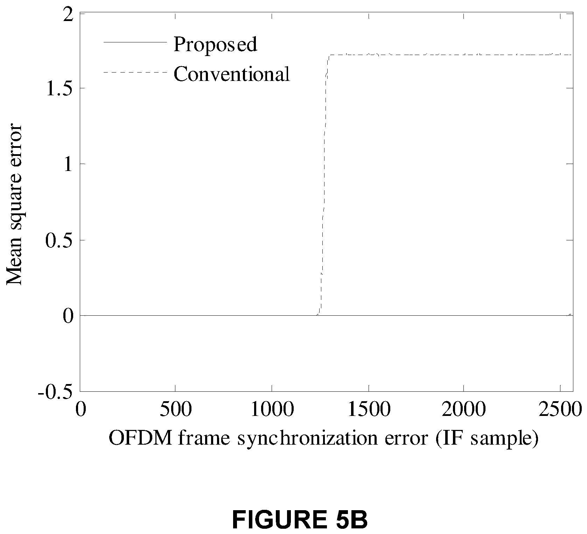

The channel estimation accuracy may be degraded for the sub-carriers around the original comb-pilot sub-carriers which have been shifted ($P_2$ and $P_4$ in Figure 3), however the effects are found to be negligible in the overall performance as shown below by the computer simulation which is discussed in relation to Figures 5A and 5B.

While the above example uses three locally consecutive pilot sub-carriers 300, two or more locally consecutive pilot sub-carriers can be implemented. One or more groups of locally consecutive pilot sub-carriers 300 can be defined and the estimation of the phase slope can be performed by weighted average on the basis of pilot sub-carrier amplitude.

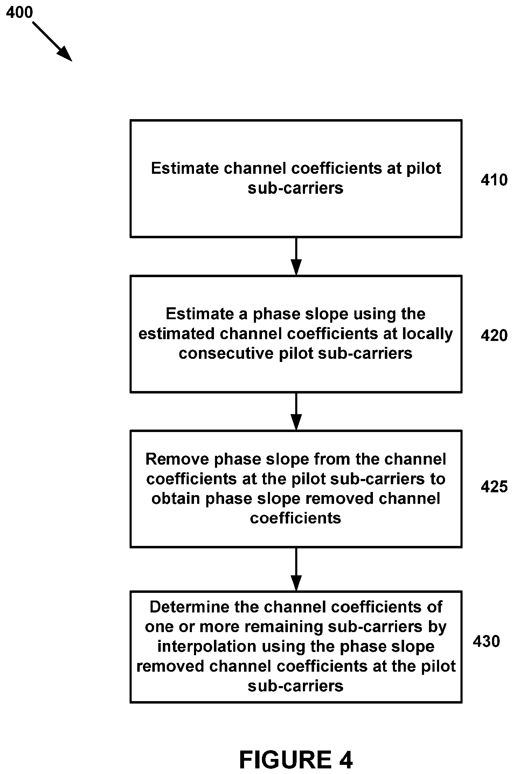

Referring to Figure 4 there is shown a flow chart representing a method 400 performed by a wireless device 105 such as a receiving device or receiver in a MU-MIMO-OFDM system 100. In particular, at step 410 the method 400 includes estimating channel coefficients at pilot sub-carriers including locally consecutive pilot sub-carriers 300. At step 420, the method 400 includes estimating a phase slope by using the estimated channel coefficients at the locally consecutive pilot sub-carriers 300. At step 425, the method 400 includes removing the phase slope from the estimated channel coefficients at the pilot sub-carriers to obtain phase slope removed estimated channel coefficients. At step 430, the method includes determining phase slope removed estimated channel coefficients of remaining sub-carriers $P_1$ $P_5$, $P_6$, $R_1$ $R_{15}$ by interpolation using the phase slope removed estimated channel coefficients at the pilot sub-carriers. In one example the one or more remaining sub-carriers carriers $P_1$ $P_5$, $P_6$, $R_1$-$R_{15}$ can be other pilot sub-carriers $P_1$ $P_5$, $P_6$ for which estimated channel coefficients were not determined in step 410.

It will be appreciated that the estimated channel coefficients at the sub-carriers 200 (including locally consecutive pilot sub-carriers and the remaining sub-carriers) can then be used to precode data to be wirelessly transmitted or decode data wirelessly received by the receiving device 105. It will also be appreciated that the receiving device 105 may be an access point 110 an/or a user terminal 120.

Referring to Figure 5A there is shown an example OFDM channel frequency response simulated utilising locally consecutive pilot sub-carriers 300. In particular, in this simulation, an OFDM system with 3,456 sub-carriers with sub-carrier spacing of 3.90625 kHz (i.e. 8 MHz / 2048) was considered.

The interpolation factor was set to 4, with the number of comb-pilot sub-carriers being 864 (i.e. 3,456 / 4). Two groups of five locally consecutive pilot sub-carriers 300 were defined for the simulation, one at a lower frequency (817 to 821) and another at a higher frequency (2609 to 2613) in order to take advantage of frequency diversity. The total number of comb-pilot sub-carriers was the same for the locally consecutive pilot sub-carriers method and the conventional equally spaced sub-carrier method. Channel simulation was performed at IF using 10,240 FFT. Cyclic prefix of length 1/4 of the OFDM symbol length was used, which corresponds to 2,560 IF samples (i.e. 10,240 / 4). Simple real and imaginary separate linear interpolation was used for both the locally consecutive pilot sub-carriers method and the conventional equally spaced sub-carrier method.

Figure 5B shows the results of channel estimation error as a function of OFDM frame timing offset when receiver signal to noise ratio was set to 25 dB. The conventional method has phase ambiguity after the OFDM frame synchronisation delay of $N/(2F)$ equals 1,280 IF samples (i.e. 10,240 / (2 × 4)). In comparison, the locally consecutive pilot sub-carriers method enables accurate channel estimation using linear interpolation over all cyclic prefix length.

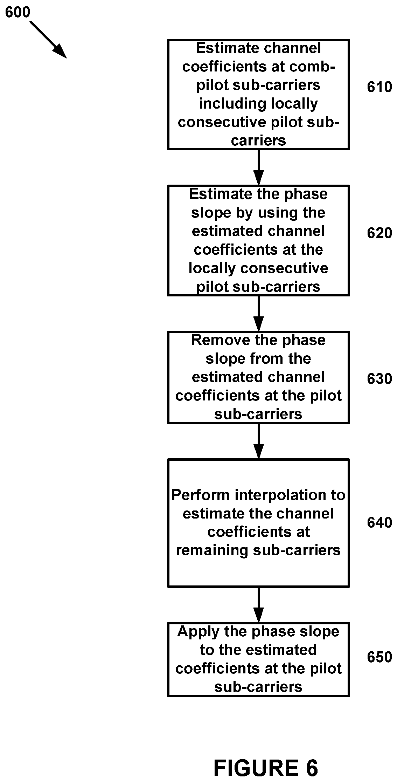

Referring to Figure 6 there is shown a flowchart representing a method 600 utilising locally consecutive sub-carriers 300 for a MU-MIMO-OFDM system 100.

In particular, the method 600 is described in relation to OFDM frame timing offset. A single-transmitter-single-receiver OFDM link can be described in baseband frequency domain as:

$$R\left(i_{\mathrm{F}}\right) = H\left(i_{\mathrm{F}}\right)X\left(i_{\mathrm{F}}\right) + N\left(i_{\mathrm{F}}\right) \tag{1}$$

where $R(i_{\mathrm{F}})$ is a received symbol, $X(i_{\mathrm{F}})$ is a transmitted symbol, and $N(i_{\mathrm{F}})$ is complex Gaussian noise. $i_{\mathrm{F}}$ = 1, 2, ..., $N_{\mathrm{F}}$ is an OFDM sub-carrier index and $N_{\mathrm{F}}$ is the total number of OFDM sub-carriers. The complex baseband frequency domain channel coefficient at $i_{\mathrm{F}}$ th OFDM sub-carrier, $H(i_{\mathrm{F}})$, includes the effect of OFDM frame timing offset which causes linear phase shift as a function of frequency.

$$H(i_F) = G(i_F)\exp(j\theta i_F) \tag{2}$$

where $\theta$ is referred as phase slope in this document.

At step 610, the method 600 includes the receiving device 105 estimating the channel coefficients at comb-pilot sub-carriers including the locally consecutive pilot sub-carriers 300.

In particular, step 610 can be performed by sending a known symbol at comb-pilot sub-carriers and by dividing the received symbol with the known symbol. Assuming $x(i_{\mathrm{F}})$ is known at the receiving device 105, we have:

$$H_{\mathrm{E}}\left(1+\left(i_{\mathrm{P}}-1\right)F\right) = \frac{R\left(1+\left(i_{\mathrm{P}}-1\right)F\right)}{X\left(1+\left(i_{\mathrm{P}}-1\right)F\right)} \tag{3}$$

where $i_{\mathrm{P}}$ = 1, 2, ..., $N_{\mathrm{P}}$, $N_{\mathrm{P}}$ is the total number of comb-pilot sub-carriers, and $F$ is an integer representing the ratio of the number of OFDM sub-carriers over the number of comb-pilot sub-carriers. For simplicity, we assume that the number of OFDM sub-carriers is an integer multiple of the number of comb-pilot sub-carriers 300.

$$F = \frac{N_{\mathrm{F}}}{N_{\mathrm{P}}} \tag{4}$$

At step 620, the method 600 includes estimating the phase slope by using the estimated channel coefficients at the locally consecutive pilot sub-carriers 300.

In particular, as step 620, the estimation of the phase slope can be calculated as:

$$\theta_{\mathrm{E}} = \frac{\sum_{i_{\mathrm{T}}=1}^{N_{\mathrm{T}}}\left|H_{\mathrm{E}}\left(i_{\mathrm{S}}+i_{\mathrm{T}}+1\right)\right|\left|H_{\mathrm{E}}\left(i_{\mathrm{S}}+i_{\mathrm{T}}\right)\right|\angle\left(H_{\mathrm{E}}\left(i_{\mathrm{S}}+i_{\mathrm{T}}+1\right)H_{\mathrm{E}}^{*}\left(i_{\mathrm{S}}+i_{\mathrm{T}}\right)\right)}{\sum_{i_{\mathrm{T}}=1}^{N_{\mathrm{T}}}\left|H_{\mathrm{E}}\left(i_{\mathrm{S}}+i_{\mathrm{T}}+1\right)\right|\left|H_{\mathrm{E}}\left(i_{\mathrm{S}}+i_{\mathrm{T}}\right)\right|} \tag{5}$$

where $i_S$ is an index of sub-carrier one less than the lowest index of the locally consecutive pilot sub-carriers 300, $i_T$ = 1, 2, ..., $N_T$, and $N_T$ is the number of locally consecutive pilot sub-carriers 300. $N_T$ should be the minimum of 2 and the maximum of any number that implementation can support.

At step 630, the method 600 includes compensating the phase slope for the estimated channel coefficients at pilot sub-carriers to obtain phase slope removed estimated channel coefficients at the pilot sub-carriers.

In particular, step 630 is performed by removing the estimated phase slope from the estimated channel coefficients at the comb-pilot sub-carriers as shown below.

$$G_E\left(1 + \left(i_P - 1\right)F\right) = H_E\left(1 + \left(i_P - 1\right)F\right)\exp\left(-j\theta_E\left[1 + \left(i_P - 1\right)F\right]\right) \qquad (6)$$

At step 640, the method 600 includes performing interpolation to determine phase slope removed estimated channel coefficients at remaining sub-carriers $P_1$ $P_5$, $P_6$, $R_1$-$R_{15}$ using the phase slope removed estimated channel coefficients (also referred to as compensated estimated channel coefficients).

In particular, step 640 can be performed by simple linear interpolation as shown below.

$$G_E\left(i_F\right) = \frac{i_F - 1 - \left(i_P - 1\right)F}{F}G_E\left(1 + i_P F\right) + \frac{1 - i_F + 1 + \left(i_P - 1\right)F}{F}G_E\left(1 + \left(i_P - 1\right)F\right) \qquad (7)$$

where 1 + ($i_P$ -1)$F \le i_F < 1 + i_P F$.

At step 650, the method 600 includes applying the phase slope to the phase slope removed estimated channel coefficients at the pilot sub-carriers.

In particular, step 650 is mathematically described below.

$$H_E\left(i_F\right) = G_E\left(i_F\right)\exp\left(j\theta_E i_F\right) \qquad (8)$$

It will be appreciated that step 650 is optional as will be highlighted in further examples below.

As can be appreciated, multiple groups of locally consecutive pilot sub-carriers 300 can be allocated within one OFDM symbol, in order to enhance the accuracy of the estimation and/or taking advantage of frequency diversity. The above method is based on weighted average of multiple estimated values of phase slope. Other methods, such as simple average or intelligent selection based on amplitudes can be used.

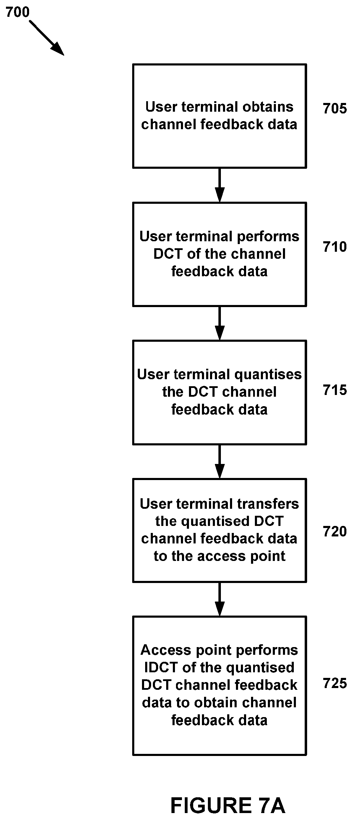

Referring to Figure 7A there is shown another example method 700 of obtaining channel state feedback in a MU-MIMO-OFDM system 100.

In particular, at step 705, the method 700 includes the user terminal 120 obtaining channel feedback data. At step 710, the method 700 includes the user terminal 120 performing discrete cosine transform (DCT) of the channel feedback data. At step 715, the method 700 includes the user terminal 120 quantising the DCT channel feedback data. At step 720, the method 700 includes the user terminal 120 transferring the quantised DCT channel feedback data to the access point. At step 725, the method 700 includes the access point 110 performing inverse discrete cosine transform (IDCT) of the quantised DCT channel feedback data to obtain channel feedback data. It will be appreciated that the access point 110 can then transfer data wirelessly using the channel feedback data.

By utilising DCT for channel feedback compression for a MU-MIMO-OFDM system 100, substantial efficiency can be achieved over the currently implemented DFT channel feedback compression method, as will be discussed in more detail below.

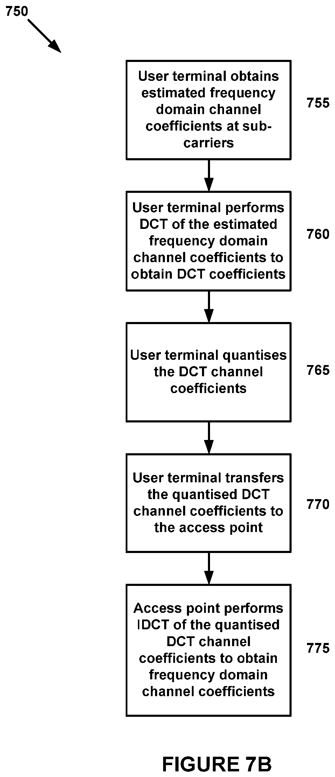

Referring to Figure 7B there is shown another example method 750 of obtaining channel state feedback in a MU-MIMO-OFDM system 100. The channel state feedback is discussed as being indicative of the channel coefficients that are determined by channel estimation. However, it will be appreciated that the channel state feedback may be indicative of additional information and thus is not only limited to channel coefficients. In one particular embodiment, the channel state feedback can be indicative of channel coefficients determined using the locally consecutive pilot sub-carriers arrangement 300 as discussed above and as will be exemplified later within this document.

At step 755, the method 750 includes a user terminal 120 obtaining estimated frequency domain channel coefficients at sub-carriers including the pilot sub-carriers and the one or more remaining sub-carriers. In particular, this step includes obtaining estimated frequency domain channel coefficients at $i_F$ th sub-carriers, $i_F$ = 1, 2, ..., $N_F$.

At step 760, the method 750 includes the user terminal 120 performing DCT of the estimated frequency domain channel coefficients to obtain DCT coefficients $d_E$. In particular, this step is performed as:

$$d_{\mathrm{E,Re}}\left(i_{\mathrm{D}}\right) = w\left(i_{\mathrm{D}}\right) \sum_{i_{\mathrm{F}}=1}^{N_{\mathrm{F}}} \mathrm{Re}\left(H_{\mathrm{E}}\left(i_{\mathrm{F}}\right)\right) \cos\left(\frac{\pi\left(2i_{\mathrm{F}}-1\right)\left(i_{\mathrm{D}}-1\right)}{2N_{\mathrm{D}}}\right) \qquad (9)$$

$$(10)$$

$$d_{\mathrm{E,Im}}(i_D) = w(i_D) \sum_{I_F=1}^{N_F} \mathrm{Im}(H(i_F)) \cos\left(\frac{\pi(2i_F - 1)(i_D - 1)}{2N_D}\right)$$

where:

$$w\left(i_D\right) = \begin{cases} \dfrac{1}{\sqrt{N_D}}, & i_D = 1 \\ \sqrt{\dfrac{2}{N_D}}, & 2 \le i_D \le N_D \end{cases}$$

and where:

$i_D$ is the DCT coefficient index; and
$N_D$ is the total number of DCT coefficients.

At step 765, the method 750 includes the user terminal 120 quantising the DCT channel coefficients. In particular, the quantisation can be performed by uniform scalar quantization on real and imaginary parts of the DCT channel coefficients. DCT channel coefficients associated to the real and imaginary parts of frequency response channel coefficients are quantised independently with $\left\lfloor B_{\mathrm{NEW}}\left(i_D\right)/2 \right\rfloor$ bits, where $B_{\mathrm{NEW}}(i_D)$ is obtained, for example, by reverse water filling. The quantised channel coefficients are given as $d_{\mathrm{E,Re,Q}}(i_D)$ and $d_{\mathrm{E,Im,Q}}(i_D)$.

At step 770, the method 750 includes the user terminal 120 transferring the quantised DCT channel coefficients to the access point 110. In particular, this step is performed by encoding the quantised coefficients as information data and send back from the user terminal 120 to the access point 110. Spectrum efficiency improvement of MU-MIMO-OFDM uplink should be utilised to minimise the time for all required user terminals to send the channel coefficients information back to access point 110. Lossless transmission is assumed in the mathematical descriptions.

At step 775, the method 750 includes the access point 110 performing IDCT of the quantised DCT channel coefficients to obtain frequency domain channel coefficients $H_R$. In particular, this step is performed as:

$$H_{\mathrm{R,Re}}\left(i_{\mathrm{F}}\right) = \sum_{i_{\mathrm{D}}=1}^{N_{\mathrm{D}}} w\left(i_{\mathrm{D}}\right) d_{\mathrm{E,Re,Q}}\left(i_{\mathrm{D}}\right) \cos\left(\frac{\pi\left(2i_{\mathrm{F}}-1\right)\left(i_{\mathrm{D}}-1\right)}{2N_{\mathrm{D}}}\right) \qquad (11)$$

$$H_{\mathrm{R,Im}}(i_{\mathrm{F}}) = \sum_{I_{\mathrm{D}}=1}^{N_{\mathrm{D}}} w(i_D) d_{\mathrm{E,Im,Q}}(i_{\mathrm{D}}) \cos\left(\frac{\pi(2i_{\mathrm{F}} - 1)(i_{\mathrm{D}} - 1)}{2N_{\mathrm{D}}}\right) \qquad (12)$$

The complex frequency domain channel coefficients restored at the access point is given by:

$$H_{\mathrm{R}}\left(i_{\mathrm{F}}\right) = H_{\mathrm{R,Re}}\left(i_{\mathrm{F}}\right) + jH_{\mathrm{R,Im}}\left(i_{\mathrm{F}}\right) \qquad (13)$$

Computer simulations have been conducted to compare the performance of DCT based channel compression against DFT based channel compression. The computer simulation was conducted using an OFDM system with 3,456 sub-carriers with sub-carrier spacing of 3.90625 kHz (i.e. 8 MHz / 2048). The 3,456 sub-carriers are grouped in 54 groups, termed sub-channels, each having 64 consecutive sub-carriers.

Channel compression was firstly performed for each sub-channel by performing DCT. The channel compression was then performed for each sub-channel by performing DFT, specifically inverse Fast Fourier Transform (IFFT). The simulation was performed by the following steps for DCT:

1) channel frequency response coefficients are estimated by conventional least-square method using known training sequence at 64 consecutive sub-carriers;
2) DCT is performed on the real (or imaginary) values of the channel frequency response coefficients;
3) E largest amplitude coefficients are selected with remaining coefficients being made zeros;
4) E coefficients are quantised with resolution of $B$ bits;
5) IDCT is performed using the quantised coefficients; and
6) original channel frequency response coefficients and restored channel frequency response coefficients are compared to derive the mean square error of the channel feedback.

Here E is the number of effective coefficients and B is the number of bits per effective coefficient (total of 2B bits are used for describing real and imaginary values of one complex coefficient).

The simulation was performed for DFT using the same steps disclosed above for DCT except step 2 was replaced by performing IFFT on the complex channel frequency response coefficients, and step 5 was replaced by performing FFT using the quantised coefficients. The receiver SNR was set to 25 dB as an example for both simulations.

More specifically, modern wireless communication systems, such as LTE and IEEE 802.16m uses orthogonal frequency division multiple access (OFDMA), where different user terminals use different groups of sub-carriers. The group of sub-carriers is called a sub-channel. In this case, the channel state information is fed back to the access point 110 on a sub-channel by sub-channel basis. The comparison is performed using 54 sub-channels, each occupying consecutive 64 sub-carriers, as an example. Channel compression is performed for each sub-channel by performing DCT or DFT (specifically IFFT). In this case, the single-transmitter-single-receiver OFDM link at $i_F$ th sub-carrier in $i_S$ th sub-channel is given by:

$$R\left(i_{\mathrm{F}},i_{\mathrm{S}}\right) = H\left(i_{\mathrm{F}},i_{\mathrm{S}}\right)X\left(i_{\mathrm{F}},i_{\mathrm{S}}\right) + N\left(i_{\mathrm{F}},i_{\mathrm{S}}\right) \tag{14}$$

The estimated channel coefficients transformed by DFT for $i_S$ th sub-channel for is given by:

$$h_{\mathrm{E}}\left(i_{\mathrm{T}},i_{\mathrm{S}}\right) = \frac{1}{N_{\mathrm{F,FFT}}} \sum_{i_F=1}^{N_{\mathrm{F,FFT}}} H_{\mathrm{E}}\left(i_F,i_{\mathrm{S}}\right)\exp\left(j2\pi\frac{\left(i_{\mathrm{T}}-1\right)\left(i_{\mathrm{F}}-1\right)}{N_{\mathrm{F,FFT}}}\right) \tag{15}$$

The estimated channel coefficients transformed by DCT for $i_S$ th sub-channel is similarly defined.

Two types of computer simulation were performed, in particular:

- Type 1: The number of channel coefficients to be quantised for conventional and proposed methods, $N_{\mathrm{Q,CON}}$ (i.e. conventional DFT) and $N_{\mathrm{Q,NEW}}$ (i.e. DCT), respectively, and the number bits for quantisation, $B_{\mathrm{CON}}(i_D)$ (i.e. conventional = DFT) and $B_{\mathrm{NEW}}(i_D)$ (i.e. DCT), are specified. The remaining channel coefficients are allocated with 0 bit and the access point 110 assumes that the values of those coefficients to be zero.
- Type 2: The number of total bits to be used per sub-channel is specified. Bit allocation based on the maximum channel coefficient amplitudes (maximum among different sub-channels) for each coefficient is used.

$$v_{FFT}\left(i_{\mathrm{T}}\right) = \max_{i_{\mathrm{S}}=1,2,\ldots,N_{\mathrm{S}}} \left| h_{\mathrm{E}}\left(i_{\mathrm{T}},i_{\mathrm{S}}\right) \right| \tag{16}$$

$$v_{DCT}\left(i_{\mathrm{D}}\right) = \max\left( \max_{i_S=1,2,\ldots,N_{\mathrm{S}}} \left| d_{\mathrm{E,Re}}\left(i_{\mathrm{D}},i_{\mathrm{S}}\right) \right|, \max_{i_S=1,2,\ldots,N_{\mathrm{S}}} \left| d_{\mathrm{E,Im}}\left(i_{\mathrm{D}},i_{\mathrm{S}}\right) \right| \right) \tag{17}$$

The simulation for Type 1 for conventional method was performed by the following steps;

1) channel frequency response coefficients are estimated by conventional least-square method using known training sequence at 64 consecutive sub-carriers, each for 54 sub-channels.
2) IDFT is performed on the 64 complex channel frequency response coefficients, each for 54 sub-channels.
3) $N_{\mathrm{Q,CON}}$ largest amplitude coefficients, herein called active coefficients, are selected with remaining coefficients being made zeros.

4) $N_{Q,CON}$ active coefficients are quantised with the resolution of $B_{Q,CON}$ bits per coefficient. (Uniform bit allocation over $N_{Q,CON}$ active coefficients.)

5) DFT is performed using the quantised coefficients.

6) original channel frequency response coefficients and restored channel frequency response coefficients are compared to derive the mean square error of the channel feedback.

The simulation for Type 2 and/or for proposed method was similarly defined. Receiver SNR was set to 25 dB as an example.

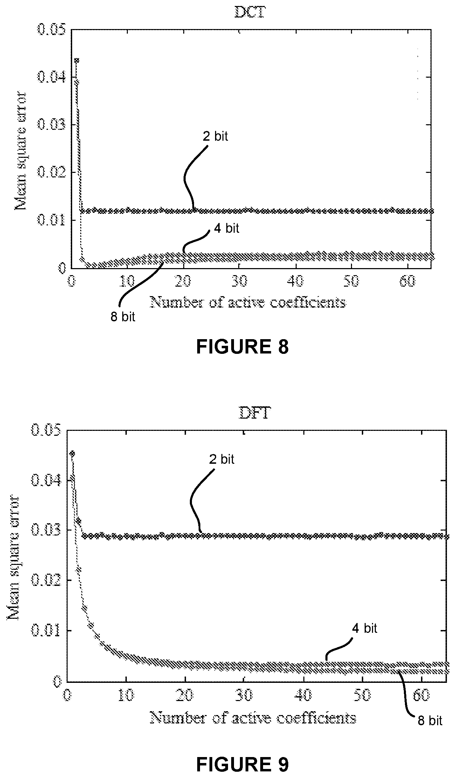

Figures 8 and 9 shows example channel feedback error results using DCT and DFT channel compression methods respectively with uniform bit allocation (Type 1). It can be seen that the channel information can be accurately fed-back to access point 110 by using 4 or 8 bit per dimension per coefficients and 5 or 6 coefficients using DCT compression method. The higher index coefficients are dominated by the noise and by removing these, the effects of noise can be reduced. The results do not reach zero error at using all 64 coefficients because of the channel estimation error due to receiver noise (arising from the specified 25 dB SNR).

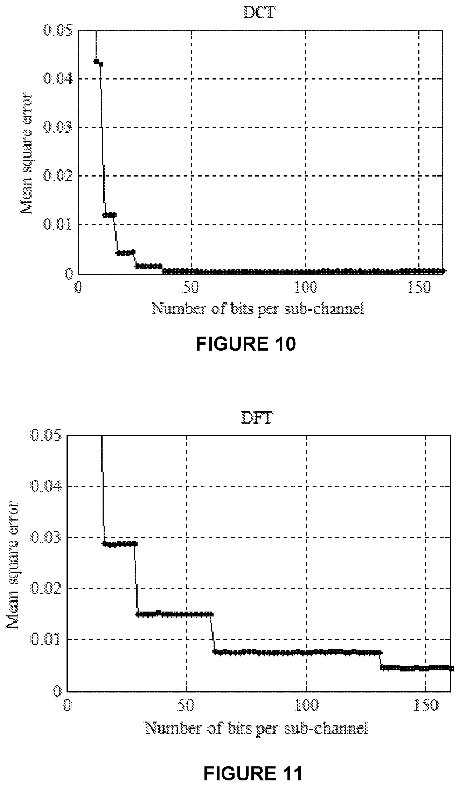

Referring to Figures 10 and 11 there is shown example channel feedback error results using DCT and DFT channel compression methods respectively and the bit allocation method based on maximum amplitude of coefficients (Type 2 simulation). The results show that approximately only 60 bits are needed for the DCT channel compression to describe an OFDM channel with 64 sub-carriers for the given channel characteristics and sub-carrier spacing.

Figures 8 and 10 clearly show the advantage of DCT based channel feedback as discussed above when compared to Figures 9 and 11 which use DFT based channel feedback. DCT based channel feedback can lead to significant efficiency for an MU-MIMO-OFDM system 100 can be achieved.

The efficiency achieved via use of DCT has been found to be extremely surprising, particularly in relation to the area of wireless communication. This is due to the fact that the channel frequency response and time domain impulse response are directly related to each other by the DFT, while the physical concept of performing DCT (or other variants thereof) on frequency response does not appear to have a direct bearing or physical meaning. Nevertheless, the use of DCT for the purpose of channel compression has been surprisingly found to outperform that of the DFT based channel compression as previously accepted in industry, which can therefore provide a more efficient MU-MIMO-OFDM system 100.

It will be appreciated from the above example that whilst DCT compression can be used for compressing estimated channel coefficients, it is possible to advantageously utilise DCT compression in relation to phase slope removed estimated channel coefficients as discussed in relation to Figures 2 to 6 where quantised DCT channel coefficients indicative of phase slope removed estimated channel coefficients are transferred from the user terminal 120 to the access point 110 for downlink signal processing. In particular, step 705 of method 700 includes obtaining the channel feedback data which includes the user terminal 120 obtaining the phase slope removed estimated downlink channel coefficients as discussed in relation to method 400 or steps 610 to 640 of method 600. Steps 710 to 720 are performed as discussed above. At step 725, the method 700 includes the access point 110 performing the inverse discrete cosine transform (IDCT) of the quantised DCT channel feedback data to obtain the channel feedback data, wherein the channel feedback data is indicative of the phase slope removed estimated channel coefficients.

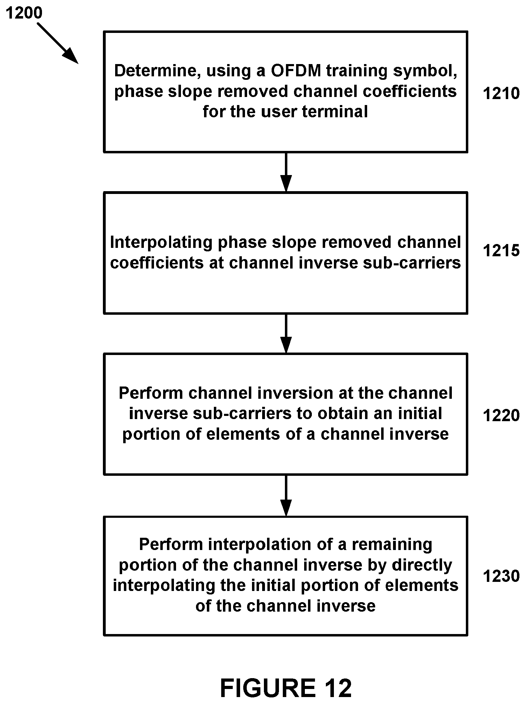

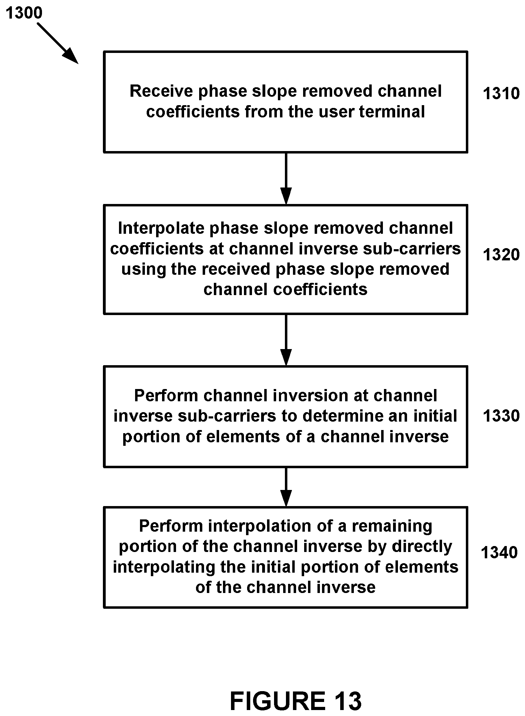

Figures 12 and 13 disclose methods to interpolate elements of a channel inverse directly. Before constructing the channel inverse at selected pilot sub-carriers (referred to as channel inverse sub-carriers 1400), the user specific phase slope due to OFDM frame timing offset is removed. This is applicable to both uplink and downlink signal processing. Interpolation of the channel inverse is performed on the phase slope compensated channel inverse. For the uplink, the phase slope is restored after user symbols are extracted by the zero-forcing operation. For downlink, phase slope is restored by having pre-coded reference symbol, typically preceding the pre-coded data symbols.

Referring to Figure 12 there is shown a method 1200 performed by an access point 110 of a MU-MIMO-OFDM system 100 for uplink signal processing. In particular, at step 1210, the method includes the access point 110 determining, using a OFDM training symbol received from a user terminal 120, phase slope removed estimated channel coefficients for the user terminal 120.

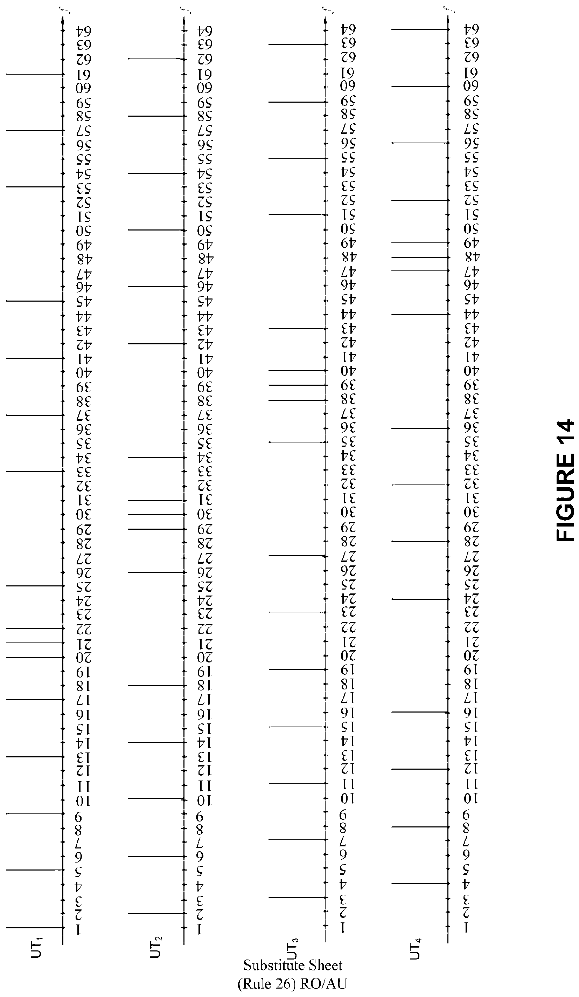

At step 1215, the method 1200 includes the access point 110 interpolating phase slope removed estimated channel coefficients at channel inverse sub-carriers. The channel inverse sub-carriers 1400 (see Fig. 14) are common sub-carriers at which the estimated channel coefficients are determined by the interpolation for all user terminals 120 of the multi-user OFDM MIMO system 100.

At step 1220, the method 1200 includes the access point 110 performing channel inversion using the phase slope removed estimated channel coefficients at the channel inverse sub-carriers 1400 (see Fig. 14) to obtain an initial portion of elements of the channel inverse.

At step 1230, the method 1200 includes the access point 110 performing interpolation of remaining elements of the channel inverse by directly interpolating the initial elements of the channel inverse. Transmitted symbols can be reconstructed by the access point 110 from OFDM data symbols received from the user terminal 120 using the interpolated channel inverse and applying the specific phase slope for the user terminal 120.

Referring to Figure 13 there is shown a method 1300 performed by an access point 110 of a MU-MIMO-OFDM system 100 for downlink signal processing. At step 1310, the method 1300 includes the access point 110 receiving estimated channel coefficients from a user terminal 110, wherein an estimated phase slope has been removed. Therefore, it will be appreciated that the received estimated channel coefficients are phase slope removed estimated channel coefficients.

At step 1320, the method 1300 includes the access point 110 interpolating phase slope removed estimated channel coefficients at channel inverse sub-carriers using the phase slope removed estimated channel coefficients received from the user terminal 120. The channel inverse sub-carriers 1400 (see Fig. 14) are common sub-carriers at which the estimated channel coefficients are to be determined by interpolation for all user terminals 110 of the multi-user OFDM MIMO system 100.

At step 1330, the method 1300 includes the access point 110 performing channel inversion using the phase slope removed estimated channel coefficients at channel inverse sub-carriers 1400 (see Fig. 14) to determine an initial portion of a channel inverse.

At step 1340, the method 1300 includes the access point 110 performing interpolation of a remaining portion of elements of the channel inverse by directly interpolating the initial elements of the channel inverse. OFDM training symbols transmitted from the access point 110 to each user terminal 120 can be pre-coded by the channel inverse to allow the user terminal to estimate a pre-coded channel estimate. OFDM data symbols transmitted from the access point to each user terminal are pre-coded by the channel inverse such that each user terminal can perform zero-forcing detection using the estimated pre-coded channel estimate.

It will be appreciated that phase slope removed estimated channel coefficients received at step 1310 can be received from the user terminal 120 performing method 400 or steps 610 to 640 of method 600 as discussed above.

A method of uplink signal processing will now be described in relation to an example of a comb-pilot sub-carrier arrangement with locally consecutive pilot sub-carriers 300 as shown in Figure 14. In particular, in this embodiment, the uplink packet from the user terminal includes channel training OFDM symbols and data symbols. The channel training symbols are specifically used for estimation of the uplink channel. This is commonly known as block type channel training. It will be appreciated that this channel inverse interpolation method is equally applicable to comb type channel training where one OFDM symbol contains both the channel training sub-carrier symbols and data sub-carrier symbols.

Referring more specifically to Figure 14 the comb-pilot sub-carrier arrangement with locally consecutive pilot sub-carriers 300 is for four user terminals 110 using the total of 64 OFDM sub-carriers. This type of arrangement is referred as FDMA channel training since different user terminals 110 are distinguished by using different sub-carrier frequencies. Channel training sub-carrier symbols are sent at sub-carrier indices of 1, 5, 9, 13, 17, 20, 21, 22, 25, 33, 37, 41, 45, 53, 57, and 61 in the case of UT1, and so on. In particular, each user terminal 110 occupies 16 sub-carriers with the interpolation factor of 64 / 16 = 4. The number of user terminals can be extended by using a larger interpolation factor and/or combining CDMA channel training.

Channel coefficients are estimated at each comb-pilot sub-carrier location by known conventional pilot-aided channel estimation techniques, such as least square error method. Once the estimated channel coefficients are determined at locally consecutive pilot sub-carriers 300, phase slope can be estimated for each user terminal, as discussed above. For example, the phase slope for user terminal $UT_1$ should be estimated by using the channel estimates at locally consecutive pilot sub-carriers 20, 21, and 22.

Once the phase slope is removed from the estimated channel coefficient values, interpolation can be performed to obtain the estimates of the channel coefficient at sub-carriers common to all user terminals 120. These common sub-carriers at which the channel coefficients are to be estimated by the interpolation for all user terminals 120 are referred to as the channel inverse sub-carriers 1400. An example of the selection of the channel inverse sub-carriers 1400 is shown in Figure 14. In this case, sub-carrier indices 1, 5, 9, 13, 17, 21, 25, 29, 33, 37, 41, 45, 49, 53, 57, 61, and 64 are selected as the channel inverse sub-carriers 1400. Sub-carrier indices 1 to 61 have uniform interval of 4. Sub-carrier index 64 is also selected to remove errors due to extrapolation of channel inverse.

Channel inversion is then performed at the channel inverse sub-carriers. The channel inversion obtains an initial portion of elements of the channel inverse. Conventional channel inversion algorithms can be used to obtain the inverse of the estimated channel matrix at the channel inverse sub-carriers.

Different from conventional methods, a remaining portion of elements of the channel inverse at remaining sub-carriers (2, 3, 4, 6, 7, 8, 10, 11, 12, 14, 15, 16, 18, 19, 20, 22, 23, 24, 26, 27, 28, 30 31, 32, 34, 45, 46, 38, 39, 40, 42, 43, 44, 46, 47, 48, 50, 51, 52, 54, 55, 56, 58, 59, 60, 62, and 63) are obtained by direct interpolation of the initial portion of elements of the channel inverse. Conventional interpolation methods such as linear, polar linear, polynomial, spline, etc. can be used. It will be appreciated that the remaining portion of elements of the channel inverse together with the initial portion of elements of the channel inverse provide or form the channel inverse.

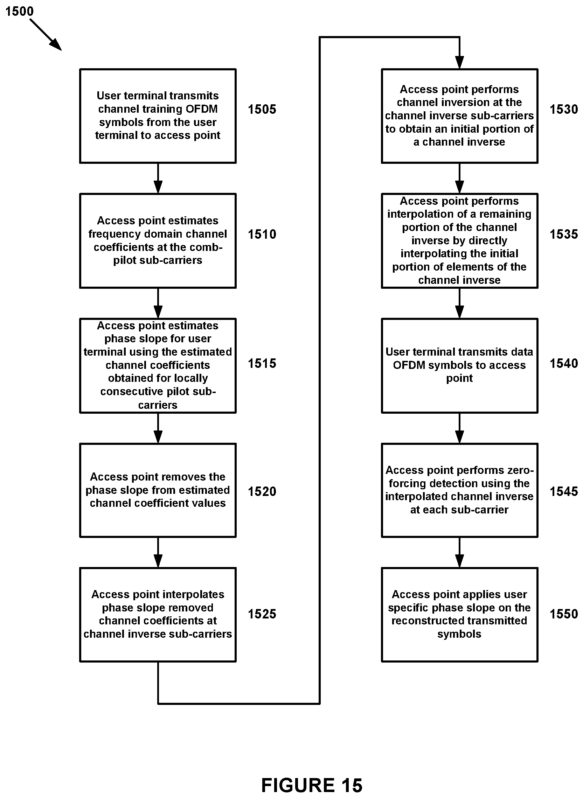

Referring to Figure 15 there is shown a flowchart representing an example method of uplink signal processing including estimating channel coefficients and calculating the channel inversion for a MU-MIMO-OFDM system 100. The method 1500 will be described with reference to the comb-pilot sub-carrier arrangement with locally consecutive pilot sub-carriers 300 described in relation to Figure 14.

In particular, at step 1505, the method 1500 includes each user terminal 120 transmitting channel training OFDM symbols to the access point 110.

At step 1510, the method 1500 includes the access point 110 estimating frequency domain uplink channel coefficients at the comb-pilot sub-carriers including locally consecutive pilot sub-carriers 300. For example, the frequency domain uplink channel coefficients can be estimated by a conventional pilot-aided channel estimation method at sub-carrier indices of 1, 5, 9, 13, 17, 20, 21, 22, 25, 33, 37, 41, 45, 53, 57, and 61 for user terminal UT1. Channels between all active user terminal transmitters and access point receivers can be estimated.

At step 1515, the method 1500 includes the access point 110 estimating the phase slope for each user terminal 120 of the multi-user OFDM MIMO system 100 using the uplink estimated channel coefficients obtained for the locally consecutive pilot sub-carriers 300. In this example, the phase slope can be estimated by using the uplink estimated channel coefficient values at sub-carrier indices of 20, 21, and 22 for user terminal UT1. The phase slope can be estimated for each user terminal 120 for each sub-channel. When one user terminal 120 occupies multiple sub-channels, the estimated phase slope values for different sub-channels occupied by the user terminal 120 may be utilised to obtain a single phase slope estimation value for the user terminal 120 by, for example, weighted average.

At step 1520, the method 1500 includes the access point 110 removing the phase slope from the uplink estimated channel coefficient values at the pilot sub-carriers to obtain phase slope removed uplink estimated channel coefficients.

At step 1525, the method 1500 includes the access point 110 interpolating phase slope removed uplink estimated channel coefficients at channel inverse sub-carriers using the phase slope removed uplink channel estimated coefficients at the pilot sub-carriers. A conventional interpolation method can be used such as linear, polar linear, polynomial, or spline interpolation methods.

At step 1530, the method 1500 includes the access point 110 performing channel inversion at the channel inverse sub-carriers 1400 using the phase slope removed estimated channel coefficients at the channel inverse sub-carriers. A conventional channel inversion algorithm can be used. The channel inversion in this step obtains an initial portion of elements of the channel inverse.

At step 1535, the method 1500 includes the access point 110 performing interpolation of a remaining portions of elements of the channel inverse by using the initial portion of elements of the channel inverse by a conventional interpolation method such as linear, polar linear, polynomial, or spline interpolation.

At step 1540, the method 1500 includes one or more user terminals 120 transmitting data OFDM symbols to the access point 110.

At step 1545, the method 1500 includes the access point 110 performing zero-forcing detection using the interpolated channel inverse at each sub-carrier of the respective user terminal(s) 120..

At step 1550, the method 1500 includes the access point 110 applying the user terminal specific phase slope on the reconstructed transmitted symbols for the respective user terminal(s) 120.

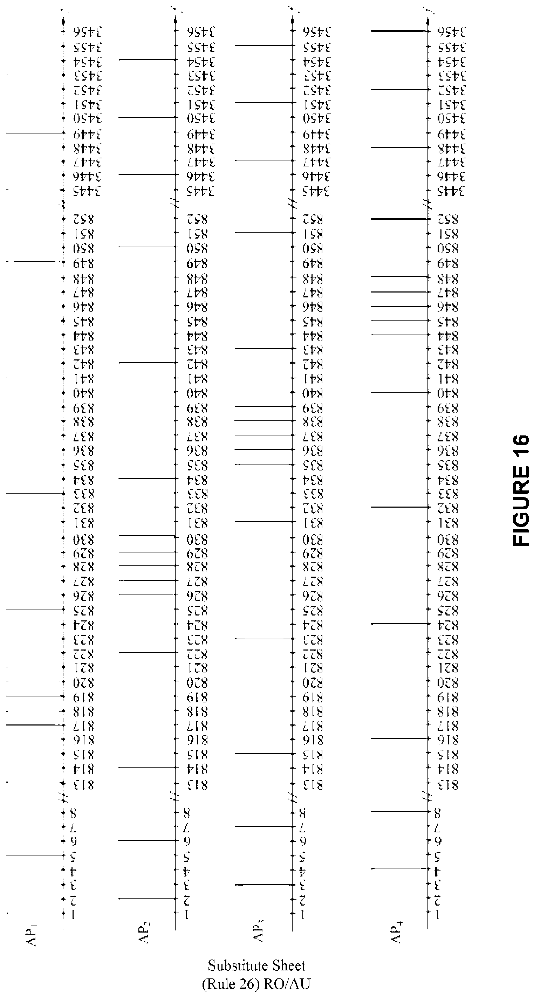

A method of downlink signal processing will now be described in relation to Figure 16 which shows an example downlink comb-pilot sub-carrier arrangement 200 including a locally consecutive pilot sub-carrier arrangement 300 for four access point antennas. The same sub-channel and sub-carrier arrangement with the previous example of the uplink discussed in relation to Figures 14 and 15, and in particular, 54 sub-channels, each supporting 64 OFDM sub-carriers, with the total of 3,456 OFDM sub-carriers are defined.

Different from the uplink channel training arrangement discussed in relation to Figure 14 where the locally consecutive pilot sub-carriers 300 are defined for each sub-channel, only one group of locally consecutive pilot sub-carriers 300 is needed for the entire frequency bandwidth, since all OFDM sub-carriers are generated from the access point 110.

In the example shown in Figure 16, sub-carrier indices 817 to 821 are allocated as locally consecutive pilot-sub-carriers for access point antenna AP1, and so on. Another group of locally consecutive pilot sub-carriers 300 can be defined, for example, from 2605 to 2636 (pilot arrangement from 2605 to 2636 are the same as that of 813 to 848), to take advantage of frequency diversity.

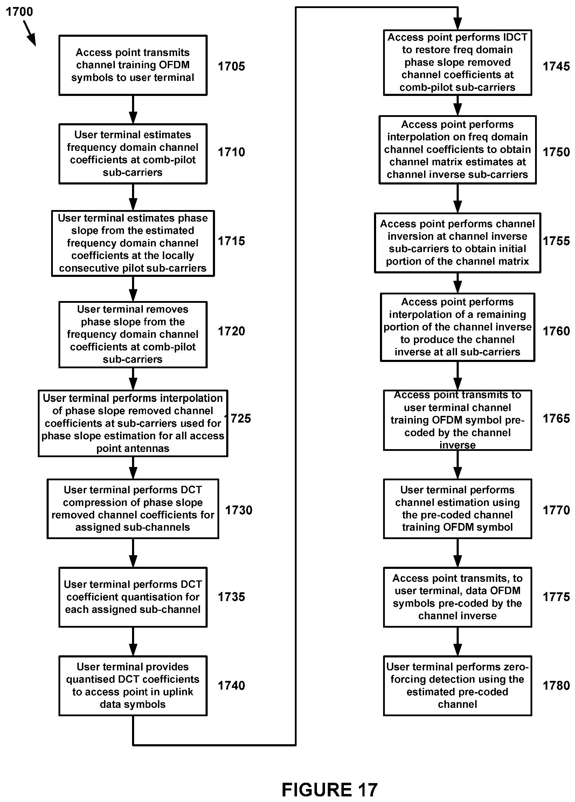

Referring to Figure 17 there is shown a flowchart representing an example method of downlink signal processing including estimating channel coefficients, compressing the estimate channel coefficients using DCT and calculating a part of the channel inverse using interpolation for a MU-MIMO-OFDM system 100. The method 1700 will be described with reference to the downlink comb-pilot sub-carrier arrangement 200 including the locally consecutive pilot sub-carrier arrangement 300 discussed in relation to Figure 16.

In particular, at step 1705, the method 1700 includes the access point 110 transmitting channel training OFDM symbols to each user terminal of the of the multi-user OFDM MIMO system 100. The channel training OFDM symbols include comb-pilot sub-carriers 200 which include locally consecutive pilot sub-carriers 300 as discussed in previous examples. In addition, the channel training OFDM symbols may be extended with orthogonal codes to combine CDMA channel training. In the example, interpolation factor of 4 with Walsh code of length 8 are used to differentiate 32 AP transmitters.

At step 1710, the method 1700 includes each user terminal 120 estimating frequency domain downlink channel coefficients at comb-pilot sub-carriers 200 and the one or more remaining sub-carriers $R_1$-$R_{15}$. The channel estimation should be made at least at the sub-channels that are assigned to the respective user terminal 120 including the locally consecutive pilot sub-carriers 300.

At step 1715, the method 1700 includes each user terminal 120 estimating a phase slope from the estimated frequency domain downlink channel coefficients at the locally consecutive pilot sub-carriers 300. Only one phase slope estimate representative of the all access point antennas 112 needs to be determined for each user terminal 120. The representative phase slope value may be derived, for example, by weighted average of phase slope estimates corresponding to a different access point antenna 112.

At step 1720, the method 1700 includes each user terminal 120 removing the phase slope from the estimated frequency domain downlink channel coefficients at comb-pilot sub-carriers 200 for all access point antennas. This step results in each user terminal 120 obtaining phase slope removed channel coefficients at the comb-pilot sub-carriers 200.

At step 1725, the method 1700 includes each user terminal 120 performing interpolation of phase slope removed downlink estimated channel coefficients at sub-carriers (herein referred to as the DCT sub-carriers) used for phase slope estimation for all access point antennas 112 to compensate the channel estimates. The DCT sub-carriers can include one or more pilot sub-carriers and one or more remaining sub-carriers. Interpolating phase slope removed channel coefficients at the DCT sub-carriers is performed to provide uniformity in order to allow for the DCT compression to be performed in later steps. A conventional interpolation method such as linear, polar linear, polynomial, etc. can be used. In the example discussed in relation to Figure 16, the channel coefficients for access point antenna AP1 should be derived by interpolation at 829, 837, and 845 (and at 2,621, 2,629, and 2,637, if another group of locally consecutive pilot sub-carriers 300 are defined from 2605 to 2636). This will result in an estimated channel coefficient value every 4th sub-carrier for all access point antennas 112.

At step 1730, the method 1700 includes each user terminal 120, for sub-channels assigned to the respective user terminal 120, performing DCT compression to produce a reduced number of DCT coefficients, each for real and imaginary component. In this example, each of 54 sub-channels has 64 sub-carriers, resulting in the total of 3,456 sub-carriers. Each sub-channel has the total of 16 comb-pilot sub-carriers 200. DCT is performed twice, firstly on 16 real components of the phase slope removed estimated channel coefficients and then secondly on 16 imaginary components of the phase slope removed channel coefficients. Only the first six DCT coefficients are retained. The 7th to 16th coefficients are regarded as zeros.

At step 1735, the method 1700 includes each user terminal 120 performing DCT coefficient quantisation for each sub-channel assigned to the respective user terminal. Normalisation is performed once for all $N_{SC}(i_{UT})$ x 6 x 2 DCT coefficients so that quantisation does not cause clipping while maximising the dynamic range of the quantisation, where $N_{SC}(i_{UT})$ is the number of sub-channel allocated to $i_{UT}$ th user terminal 120. An example quantisation, which uses 44 bits for real components and 44 bits for imaginary components per sub-channel, is performed as follows:

    a. 1st DCT coefficient, real or imaginary: 12 bits signed 2's complement
    b. 2nd DCT coefficient, real or imaginary: divide by 2, and then allocate 9 bits of 2's complement
    c. 3rd DCT coefficient, real or imaginary: divide by 2, and then allocate 8 bits of 2's complement
    d. 4th DCT coefficient, real or imaginary: divide by 4, and then allocate 6 bits of 2's complement.
    e. 5th DCT coefficient, real or imaginary: divide by 4, and then allocate 4 bits of 2's complement.
    f. 6th DCT coefficient, real or imaginary: divide by 8, and then allocate 4 bits of 2's complement.

At step 1740, the method 1700 includes transferring quantised DCT coefficients from each user terminal 120 to the access point 110 by embedding these in uplink data symbols. Feedback includes only the DCT coefficients associated to the sub-channel assigned to the respective user terminal 120.

At step 1745, the method 1700 includes the access point 110, for each sub-channel, and for each active user terminal 120 assigned to the sub-channel, performing IDCT to restore the frequency domain phase slope removed downlink estimated channel coefficients for each of access point antennas 112 at the comb-pilot sub-carriers 200.

At step 1750, the method 1700 includes the access point 110 performing interpolation on frequency domain phase slope removed downlink estimated channel coefficients to obtain channel matrix estimates at channel inverse sub-carriers. A conventional interpolation/extrapolation method can be used.

At step 1755, the method includes the access point 110 performing channel inversion at channel inverse sub-carriers using the phase slope removed downlink estimated channel coefficients at the channel inverse sub-carriers to obtain an initial portion of elements of the channel inverse. A conventional matrix inversion algorithm can be used.

At step 1760, the method includes the access point 110 performing interpolation of a remaining portion of elements of the channel inverse using the initial portion of elements of the channel inverse, such that the initial portion and the remaining portion of the channel inverse produce the channel inverse at all sub-carriers. A conventional interpolation method can be used.

At step 1765, the method 1700 includes the access point 110 transmitting, to each user terminal 120, channel training OFDM symbol pre-coded by the channel inverse. The channel training OFDM symbol can be a conventional channel training symbols using all OFDM sub-carriers.

At step 1770, the method 1700 includes each user terminal 120 performing channel estimation using the pre-coded channel training OFDM symbol. A conventional pilot-aided channel estimation method can be used. The estimated channel using the pre-coded channel training OFDM symbol is referred to as an estimated pre-coded channel.

At step 1775, the method 1700 includes the access point 110 transmitting, to one or more user terminals, OFDM data symbols pre-coded by the channel inverse.

At step 1780, the method includes each respective user terminal 120 which received the OFDM data symbols, performing zero-forcing detection (single coefficient at each sub-carrier) using the estimated pre-coded channel.

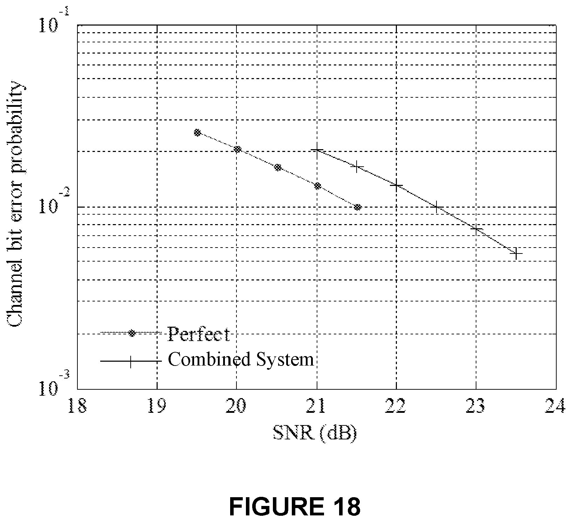

Referring to Figure 18 there is shown results of a simulation of a MU-MIMO-OFDM downlink of a MU-MIMO-OFDM system 100 wherein the above mentioned methods of estimating channel coefficients, compressing the estimate channel coefficients using DCT and calculating part of the channel inverse using interpolation for a MU-MIMO-OFDM system were utilised in combination.

In particular, the simulation was performed using the following parameters of the MU-MIMO-OFDM system 100:

- 32 access point transmitters/antennas, 16 user terminal receivers.
- 3,456 OFDM sub-carriers with 8 MHz / 2048 = 3.90625 kHz sub-carrier spacing.
- 54 sub-channels each with 64 OFDM sub-carriers.
- Each user terminal is allocated with the full 54 sub-channels.
- Channel training pilot sub-carriers 200 as defined above using two sets of locally consecutive pilot sub-carriers 300. The channel training symbols are extended by Walsh code with length 8 to support 32 access point transmitters. (Channel estimation requires 8 channel training OFDM symbols.)
- DCT compression is performed for each sub-channel, using 6 real and 6 imaginary coefficients with the bit allocation. Total number of bits per user to be feedback for 32 access point transmitters and 54 sub-channels is 44 x 2 x 54 x 32 = 152,064 bits. This amounts to 9 data OFDM symbols for channel feedback, if 64QAM and 5/6 FEC (Forward Error Correction) are used, and to 22 data OFDM symbols if 16QAM and 1/2 FEC are used.
- Uncorrelated exponentially decaying multipath channel.
- 64QAM for data OFDM symbols. Performance is measured on un-coded (without using FEC) bit error probability, also known as channel bit error probability.

Figure 18 shows the computer simulation results. Figure 18 also shows "perfect" results for comparison to the simulated results, wherein "perfect results" refer to:

1. Estimation of the channel is perfect without being deteriorated by receiver noise or signal processing error (such as interpolation error),
2. Feedback of the channel is perfect without being degraded by channel compression and/or quantisation, and
3. Calculation of the channel inverse is perfect without having interpolation error.

The combined use of the methods were found to produce the results close to those of the perfect channel estimation, feedback, and channel inverse calculation, approximately only 1 dB away as shown by Figure 18.

It will be appreciated that the uplink and downlink signal processing methods can be performed by the access point 110 and the user terminals 120. In particular, during uplink signal processing, the access point 110 is configured to:

1. estimate, based on an uplink channel training OFDM symbol from each user terminal 120, uplink channel coefficients of pilot sub-carriers, the pilot sub-carriers 200 including locally consecutive pilot sub-carriers 300;
2. estimate an uplink phase slope by using the uplink channel coefficients at the locally consecutive pilot sub-carriers 300;
3. remove the uplink phase slope from the uplink estimated channel coefficients at the pilot sub-carriers 200 to obtain phase slope removed uplink estimated channel coefficients;
4. determine phase slope removed uplink estimated channel coefficients of one or more remaining sub-carriers by interpolation using the phase slope removed channel coefficients at the pilot sub-carriers;
5. interpolate, using the phase slope removed uplink estimated channel coefficients at the pilot sub-carriers and the one or more remaining sub-carriers, phase slope removed uplink channel coefficients at channel inverse sub-carriers 1400;
6. perform channel inversion using the phase slope removed uplink estimated channel coefficients at the channel inverse sub-carriers 1400 to obtain an initial portion of elements of an uplink channel inverse;

7. interpolate a remaining portion of elements of the uplink channel inverse using the initial portion of elements of the uplink channel inverse; and

8. perform zero-forcing detection upon OFDM data symbols received from each user terminal 120 using the respective uplink channel inverse, wherein the phase slope is applied to reconstructed transmitted symbols.

During downlink signal processing, each user terminal 120 is configured to:

1. estimate, using downlink channel training OFDM symbols received from the access point 110, downlink estimated channel coefficients of the pilot sub-carriers 200;

2. estimate a downlink phase slope by using the estimated channel coefficients at the locally consecutive pilot sub-carriers 300;

3. remove the downlink phase slope from the estimated channel coefficients at the pilot sub-carriers 200 to obtain phase slope removed downlink estimated channel coefficients at the pilot sub-carriers; and

4. determine phase slope removed channel coefficients of one or more remaining sub-carriers by interpolation using the phase slope removed estimated channel coefficients at the pilot sub-carriers;

5. perform a discrete cosine transform (DCT) of the phase slope removed downlink estimated channel coefficients at the pilot sub-carriers to obtain DCT downlink channel coefficients;

6. quantise the DCT downlink channel coefficients to obtain quantised DCT downlink channel coefficients; and

7. transfer to the access point 110, the quantised DCT downlink channel coefficients.

Also, during the downlink signal processing for each user terminal 120, the access point 110 is configured to:

1. receive, from each user terminal 120, the quantised DCT downlink channel coefficients;

2. perform an inverse discrete cosine transform (IDCT) of the quantised DCT downlink channel coefficients to obtain the phase slope removed downlink estimated channel coefficients at the pilot sub-carriers in the frequency domain;

3. interpolate, using the phase slope removed downlink estimated channel coefficients at the pilot sub-carriers, phase slope removed downlink estimated channel coefficients at the channel inverse sub-carriers;

4. perform channel inversion using the phase slope removed downlink estimated channel coefficients at the channel inverse sub-carriers to obtain an initial portion of elements of a downlink channel inverse for the respective user terminal;

5. interpolate a remaining portion of elements of the downlink channel inverse using the initial portion of elements of the downlink channel inverse;

6. transmit, to each user terminal 120, a downlink OFDM training symbol pre-coded with the respective downlink channel inverse to allow the respective user terminal to determine an estimated pre-coded channel; and

7. transmit, to the each user terminal 120, OFDM data symbols pre-coded with the respective downlink channel inverse to allow the respective user terminal to perform zero-forcing detection using the estimated pre-coded channel.

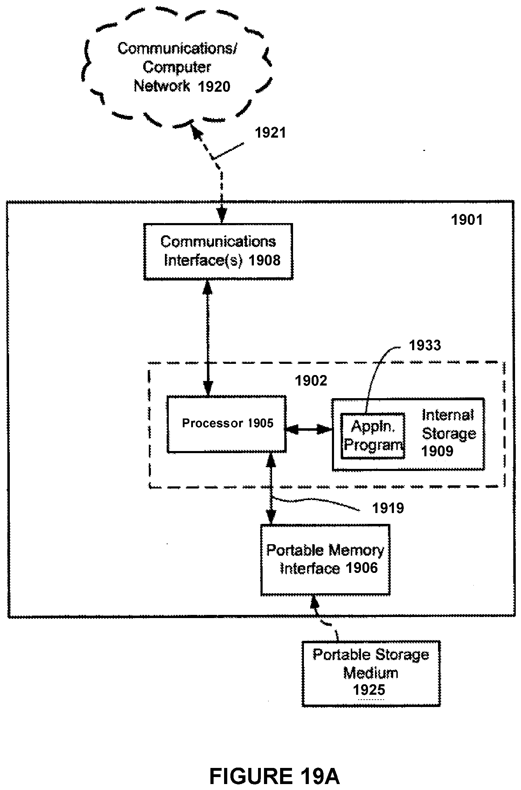

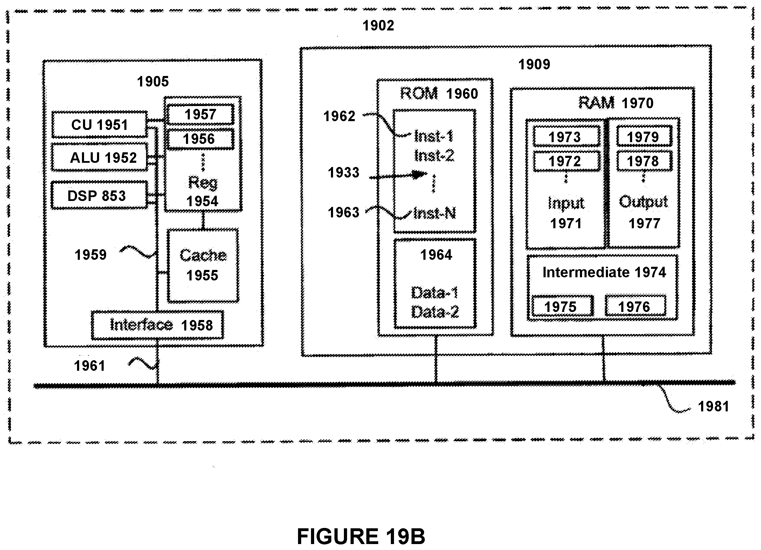

Figures 19A and 19B collectively form a schematic block diagram of a general purpose electronic device 1901 including embedded components which are suitable for use as part of the access point 110 and/or the user terminal 120 which can both act as a receiving device 105. In particular embodiments, the electronic device 801 may be implemented in dedicated hardware such as one or more integrated circuits performing the above-mentioned functions. Such dedicated hardware may include graphic processors, digital signal processors, or one or more microprocessors and associated memories.

As seen in Figure 19A, the electronic device 1901 comprises an embedded controller 1902. Accordingly, the electronic device 1901 may be referred to as an "embedded device." In the present example, the controller 1902 has a processing unit (or processor) 1905 which is bidirectionally coupled to an internal storage module 1909. The storage module 1909 may be formed from non-volatile semiconductor read only memory (ROM) 1960 and semiconductor random access memory (RAM) 1970, as seen in Figure 19B. The RAM 1970 may be volatile, non-volatile or a combination of volatile and non-volatile memory.

As seen in Figure 19A, the electronic device 1901 also comprises a portable memory interface 1906, which is coupled to the processor 1905 via a connection 1919. The portable memory interface 1906 allows a complementary portable memory device 1925 to be coupled to the electronic device 1901 to act as a source or destination of data or to supplement the internal storage module 1909. Examples of such interfaces permit coupling with portable memory devices such as Universal Serial Bus (USB) memory devices, Secure Digital (SD) cards, Personal Computer Memory Card International Association (PCMIA) cards, optical disks and magnetic disks.

The electronic device 1901 also has a communications interface 1908 to permit coupling of the electronic device 1901 to a computer or communications network 1920 via a connection 1921. The connection 1921 may be wired or wireless. For example, the connection 1921 may be radio frequency or optical. An example of a wired connection includes Ethernet. Further, an example of wireless connection includes Bluetooth type local interconnection, Wi-Fi (including protocols based on the standards of the IEEE 802.11 family), Infrared Data Association (IrDa) and the like.

The methods of Figures 4, 6, 7, 12, 13, 15 and/or 17 may be implemented as one or more software application programs 833 executable within the embedded controller 802 or a plurality of embedded controllers 802 in a distributed manner. In particular, with reference to Figure 19B, the steps of the described method are effected by instructions in the software 1933 that are carried out within the embedded controller 1902. The software instructions may be formed as one or more code modules, each for performing one or more particular tasks.

The software 1933 of the embedded controller 1902 is typically stored in the nonvolatile ROM 1960 of the internal storage module 1909. The software 1933 stored in the ROM 1960 can be updated when required from a computer readable medium. The software 1933 can be loaded into and executed by the processor 1905. In some instances, the processor 1905 may execute software instructions that are located in RAM 1970. Software instructions may be loaded into the RAM 1970 by the processor 1905 initiating a copy of one or more code modules from ROM 1960 into RAM 1970. Alternatively, the software instructions of one or more code modules may be pre-installed in a non-volatile region of RAM 1970 by a manufacturer. After one or more code modules have been located in RAM 1970, the processor 1905 may execute software instructions of the one or more code modules.

The application program 1933 is typically pre-installed and stored in the ROM 1960 by a manufacturer, prior to distribution of the electronic device 1901. However, in some instances, the application programs 1933 may be supplied to the user encoded on one or more computer readable storage media 1925 and read via the portable memory interface 1906 of Figure 19A prior to storage in the internal storage module 1909. In another alternative, the software application program 1933 may be read by the processor 1905 from the network 1920. Computer readable storage media refers to any non-transitory, tangible storage medium that participates in providing instructions and/or data to the embedded controller 1902 for execution and or processing. Examples of such storage media include floppy disks, magnetic tape, CD-ROM, a hard disk drive, a ROM or integrated circuit, USB memory, a magnetooptical disk, flash memory, or a computer readable card such as a PCMCIA card and the like, whether or not such devices are internal or external of the electronic device 1901. Examples of computer readable transmission media that may also participate in the provision of software, application programs, instructions and/or data to the electronic device 1901 include radio or infra-red transmission channels as well as a network connection to another computer or networked device, and the Internet or Intranets including e-mail transmissions and information recorded on Websites and the like. A computer readable medium having such software or computer program recorded on it is a computer program product.

Figure 19B illustrates in detail the embedded controller 1902 having the processor 1905 for executing the application programs 1933 and the internal storage 1909. The internal storage 1909 comprises read only memory (ROM) 1960 and random access memory (RAM) 1970. The processor 1905 is able to execute the application programs 1933 stored in one or both of the connected memories 1960 and 1970. When the electronic device 1901 is initially powered up, a system program resident in the ROM 860 is executed. The application program 1933 permanently stored in the ROM 1960 is sometimes referred to as "firmware". Execution of the firmware by the processor 1905 may fulfil various functions, including processor management, memory management, device management, storage management and user interface.

The processor 1905 typically includes a number of functional modules including a control unit (CU) 1951, an arithmetic logic unit (ALU) 1952 and a local or internal memory comprising a set of registers 1954 which typically contain atomic data elements 1956, 1957, along with internal buffer or cache memory 1955. One or more internal buses 1959 interconnect these functional modules. The processor 1905 typically also has one or more interfaces 1958 for communicating with external devices via system bus 1981, using a connection 1961.

The application program 1933 includes a sequence of instructions 1962 through to 1963 that may include conditional branch and loop instructions. The program 1933 may also include data, which is used in execution of the program 1933. This data may be stored as part of the instruction or in a separate location 1964 within the ROM 1960 or RAM 1970.

In general, the processor 1905 is given a set of instructions, which are executed therein. This set of instructions may be organised into blocks, which perform specific tasks or handle specific events that occur in the electronic device 1901. Typically, the application program 1933 waits for events and subsequently executes the block of code associated with that event. Events may be triggered in response to input from a user, via the user input devices 1913 of Figure 19A, as detected by the processor 1905. Events may also be triggered in response to other sensors and interfaces in the electronic device 1901.

The execution of a set of the instructions may require numeric variables to be read and modified. Such numeric variables are stored in the RAM 1970. The disclosed method uses input variables 1971 that are stored in known locations 1972, 1973 in the memory 1970. The input variables 1971 are processed to produce output variables 1977 that are stored in known locations 1978, 1979 in the memory 1970. Intermediate variables 1974 may be stored in additional memory locations in locations 1975, 1976 of the memory 1970. Alternatively, some intermediate variables may only exist in the registers 1954 of the processor 1905.

The execution of a sequence of instructions is achieved in the processor 1905 by repeated application of a fetch-execute cycle. The control unit 1951 of the processor 1905 maintains a register called the program counter, which contains the address in ROM 1960 or RAM 1970 of the next instruction to be executed. At the start of the fetch execute cycle, the contents of the memory address indexed by the program counter is loaded into the control unit 1951. The instruction thus loaded controls the subsequent operation of the processor 1905, causing for example, data to be loaded from ROM memory 1960 into processor registers 1954, the contents of a register to be arithmetically combined with the contents of another register, the contents of a register to be written to the location stored in another register and so on. At the end of the fetch execute cycle the program counter is updated to point to the next instruction in the system program code. Depending on the instruction just executed this may involve incrementing the address contained in the program counter or loading the program counter with a new address in order to achieve a branch operation.

Each step or sub-process in the method of Figures 4, 6, 7, 12, 13, 15 and/or 17 is associated with one or more segments of the application program 833, and is performed by repeated execution of a fetch-execute cycle in the processor 805 or similar programmatic operation of other independent processor blocks in the electronic device 801.

It will be appreciated from above that each user terminal 120 includes an antenna coupled to or integrated with the embedded controller 1902. It will also be appreciated that the access point 110 includes multiple antennas 112 which are coupled to or integrated with the embedded controller 1902.

The arrangements describes are applicable to the wireless communication industries.

Many modifications will be apparent to those skilled in the art without departing from the scope of the present invention.

Throughout this specification and the claims which follow, unless the context requires otherwise, the word "comprise", and variations such as "comprises" or "comprising", will be understood to imply the inclusion of a stated integer or step or group of integers or steps but not the exclusion of any other integer or step or group of integers or steps.

**Claims**

1. A method performed by a receiving device for estimating channel coefficients of received sub-carriers for a multi-user multiple-input multiple-output orthogonal frequency division multiplexing MU-MIMO OFDM system, including:

   shifting at least one pilot sub-carriers (200) to form locally consecutive pilot sub-carriers (300);
   estimating a phase slope by using channel coefficients estimated at the locally consecutive pilot sub-carriers (300);
   removing the phase slope from the estimated channel coefficients at the locally consecutive pilot sub-carriers (300) to obtain phase slope removed estimated channel coefficients; and
   determining phase slope removed estimated channel coefficients of one or more remaining sub-carriers by interpolation using the phase slope removed estimated channel coefficients at the pilot sub-carriers, wherein the one or more remaining sub-carriers are one or more of the received sub-carriers from which the locally consecutive pilot sub-carriers have been removed.

2. The method according to claim 1, wherein said estimating comprises estimating the phase slope without ambiguity up to $N / 2$, where $N$ is a number of baseband samples per OFDM frame for the MU-MIMO OFDM system.

3. The method according to claim 1 or 2, wherein the phase slope is calculated according to

$$\theta_{\mathrm{E}} = \frac{\sum_{i_{\mathrm{T}}=1}^{N_{\mathrm{T}}} \left| H_{\mathrm{E}}\left(i_{\mathrm{S}} + i_{\mathrm{T}} + 1\right)\right| \left| H_{\mathrm{E}}\left(i_{\mathrm{S}} + i_{\mathrm{T}}\right)\right| \angle \left(H_{\mathrm{E}}\left(i_{\mathrm{S}} + i_{\mathrm{T}} + 1\right) H_{\mathrm{E}}^{*}\left(i_{\mathrm{S}} + i_{\mathrm{T}}\right)\right)}{\sum_{i_{\mathrm{T}}=1}^{N_{\mathrm{T}}} \left| H_{\mathrm{E}}\left(i_{\mathrm{S}} + i_{\mathrm{T}} + 1\right)\right| \left| H_{\mathrm{E}}\left(i_{\mathrm{S}} + i_{\mathrm{T}}\right)\right|}$$

   where $i_S$ is an index of sub-carrier one less than the lowest index of the locally consecutive pilot sub-carriers (300), $i_{\mathrm{T}} = 1, 2, ..., N_{\mathrm{T}}$, and $N_{\mathrm{T}}$ is the number of locally consecutive pilot sub-carriers and greater or equal to 2; and, wherein removing the phase slope from the estimated channel coefficients at the pilot sub-carriers is performed according to

$$G_{\mathrm{E}}\left(1+\left(i_{\mathrm{P}}-1\right)F\right)=H_{\mathrm{E}}\left(1+\left(i_{\mathrm{P}}-1\right)F\right)\exp\left(-j\theta_{\mathrm{E}}\left[1+\left(i_{\mathrm{P}}-1\right)F\right]\right),$$

wherein F is an integer representing the ratio of the number of OFDM sub-carriers over the number of comb-pilot sub-carriers,
wherein $G_{\mathrm{E}}$ is the estimated channel coefficient,
wherein $i_{\mathrm{p}}$ is an index of the locally consecutive pilot sub-carriers (300), and
wherein $H_{\mathrm{E}}$ is the channel coefficient.

4. The method according to any one of claims 1 to 3, wherein interpolating the phase slope removed estimated channel coefficients at the one or more remaining pilot sub-carriers includes linear interpolation;

wherein the linear interpolation is performed according to

$$G_{\mathrm{E}}\left(i_{\mathrm{F}}\right)=\frac{i_{\mathrm{F}}-1-\left(i_{\mathrm{P}}-1\right)F}{F}G_{\mathrm{E}}\left(1+i_{\mathrm{P}}F\right)+\frac{1-i_{\mathrm{F}}+1+\left(i_{\mathrm{P}}-1\right)F}{F}G_{\mathrm{E}}\left(1+\left(i_{\mathrm{P}}-1\right)F\right)$$

where $1 + (i_{\mathrm{P}} -1) F \le i_{\mathrm{F}} < 1 + i_{\mathrm{P}}F$; and
wherein the method includes applying the phase slope to the phase slope removed estimated channel coefficients at the one or more remaining pilot sub-carriers according to

$$H_{\mathrm{E}}\left(i_{\mathrm{F}}\right)=G_{\mathrm{E}}\left(i_{\mathrm{F}}\right)\exp\left(j\theta_{\mathrm{E}}i_{\mathrm{F}}\right).$$

5. The method according to any one of claims 1 to 4, wherein the receiving device (105) is a user terminal (120) or an access point (110).

6. The method according to claim 5, wherein the method includes performing uplink signal processing including:

interpolating, by the access point, using the phase slope removed estimated channel coefficients at the locally consecutive pilot sub-carriers, phase slope removed estimated channel coefficients at selected pilot sub-carriers of a channel;
performing, by the access point, channel inversion using the phase slope removed estimated channel coefficients at the selected pilot sub-carriers to obtain a first portion of coefficients of a channel inversion at first sub-carriers of the channel;
interpolating, by the access point, a remaining portion of coefficients of the channel inversion at all sub-carriers but the first sub-carriers of the channel using the first portion of coefficients; and
performing, by the access point, zero-forcing detection upon OFDM data symbols received from a user terminal using the first and remaining portions of coefficients of the channel inversion.

7. A receiving device (105) for estimating channel coefficients of received sub-carriers for a multi-user multiple-input multiple-output orthogonal frequency division multiplexing (MU-MIMO OFDM) system, configured to:

shifting at least one pilot sub-carriers (200) to form locally consecutive pilot sub-carriers (300);
estimate a phase slope by using channel coefficients estimated at the locally consecutive pilot sub-carriers (300);
remove the phase slope from the estimated channel coefficients at the locally consecutive pilot sub-carriers (300) to obtain phase slope removed estimated channel coefficients; and
determine phase slope removed estimated channel coefficients of one or more remaining sub-carriers by interpolation using the phase slope removed estimated channel coefficients at the pilot sub-carriers, wherein the one or more remaining sub-carriers are one or more of the received sub-carriers from which the locally consecutive pilot sub-carriers have been removed.

8. The receiving device of claim 7, wherein the receiving device (105) is configured to estimate the phase slope without ambiguity up to $N / 2$, where $N$ is a number of baseband samples per OFDM frame for the MU-MIMO OFDM system.

9. The receiving device according to claim 7 or 8, wherein the receiving device (105) is configured to calculate the phase slope according to

$$\theta_{\mathrm{E}} = \frac{\sum_{i_{\mathrm{T}}=1}^{N_{\mathrm{T}}} \left| H_{\mathrm{E}}\left(i_{\mathrm{S}}+i_{\mathrm{T}}+1\right)\right| \left| H_{\mathrm{E}}\left(i_{\mathrm{S}}+i_{\mathrm{T}}\right)\right| \angle\left(H_{\mathrm{E}}\left(i_{\mathrm{S}}+i_{\mathrm{T}}+1\right) H_{\mathrm{E}}^{*}\left(i_{\mathrm{S}}+i_{\mathrm{T}}\right)\right)}{\sum_{i_{\mathrm{T}}=1}^{N_{\mathrm{T}}} \left| H_{\mathrm{E}}\left(i_{\mathrm{S}}+i_{\mathrm{T}}+1\right)\right| \left| H_{\mathrm{E}}\left(i_{\mathrm{S}}+i_{\mathrm{T}}\right)\right|}$$

where $i_{\mathrm{S}}$ is an index of sub-carrier one less than the lowest index of the locally consecutive pilot sub-carriers 300, $i_{\mathrm{T}}$ = 1, 2, ..., $N_{\mathrm{T}}$, and $N_{\mathrm{T}}$ is the number of locally consecutive pilot sub-carriers and greater or equal to 2; and, wherein the receiving device is configured to remove the phase slope from the estimated channel coefficients at the pilot sub-carriers according to

$$G_{\mathrm{E}}\left(1+\left(i_{\mathrm{P}}-1\right)F\right) = H_{\mathrm{E}}\left(1+\left(i_{\mathrm{P}}-1\right)F\right)\exp\left(-j\theta_{\mathrm{E}}\left[1+\left(i_{\mathrm{P}}-1\right)F\right]\right),$$

wherein F is an integer representing the ratio of the number of OFDM sub-carriers over the number of comb-pilot sub-carriers,
wherein $G_{\mathrm{E}}$ is the estimated channel coefficient,
wherein $i_{\mathrm{p}}$ is an index of the locally consecutive pilot sub-carriers (300), and
wherein $H_{\mathrm{E}}$ is the channel coefficient.

10. The receiving device according to any one of claims 7 to 9, wherein the receiving device (105) is configured to interpolate the phase slope removed estimated channel coefficients at the one or more remaining pilot sub-carriers using linear interpolation.

11. The receiving device according to claim 10, wherein the receiving device (105) is configured to perform linear interpolation according to

$$G_{\mathrm{E}}\left(i_{\mathrm{F}}\right) = \frac{i_{\mathrm{F}}-1-\left(i_{\mathrm{P}}-1\right)F}{F}G_{\mathrm{E}}\left(1+i_{\mathrm{P}}F\right) + \frac{1-i_{\mathrm{F}}+1+\left(i_{\mathrm{P}}-1\right)F}{F}G_{\mathrm{E}}\left(1+\left(i_{\mathrm{P}}-1\right)F\right)$$

where $1+(i_{\mathrm{P}}-1)F \leq i_{\mathrm{F}} < 1+i_{\mathrm{P}}F$; and,
wherein the receiving device is configured to apply the phase slope to the phase slope removed estimated channel coefficients at the one or more remaining pilot sub-carriers according to

$$H_{\mathrm{E}}\left(i_{\mathrm{F}}\right) = G_{\mathrm{E}}\left(i_{\mathrm{F}}\right)\exp\left(j\theta_{\mathrm{E}}i_{\mathrm{F}}\right).$$

12. The receiving device according to any one of claims 7 to 11, wherein the receiving device (105) is a user terminal (120) or an access point (110).

**Patentansprüche**

1. Verfahren, das von einer Empfangsvorrichtung durchgeführt wird, um Kanalkoeffizienten von empfangenen Unterträgern für ein Mehrbenutzer-Mehrfacheingangs-Mehrfachausgangs-Orthogonal-Frequenzmultiplexsystem (MU-MIMO OFDM) zu schätzen, das Folgendes umfasst:

Verschieben mindestens eines Pilotunterträgers (200), um lokal aufeinanderfolgende Pilotunterträger (300) zu bilden;
Schätzen einer Phasensteigung unter Verwendung von Kanalkoeffizienten, die an den lokal aufeinanderfolgenden Pilotunterträgern (300) geschätzt werden;
Entfernen der Phasensteigung aus den geschätzten Kanalkoeffizienten an den lokal aufeinanderfolgenden Pilotunterträgern (300), um geschätzte Kanalkoeffizienten ohne Phasensteigung zu erhalten; und
Bestimmen von von der Phasensteigung befreiten geschätzten Kanalkoeffizienten eines oder mehrerer verbleibender Unterträger durch Interpolation unter Verwendung der von der Phasensteigung befreiten geschätzten Kanalkoeffizienten an den Pilotunterträgern, wobei der eine oder die mehreren verbleibenden Unterträger einer oder mehrere der empfangenen Unterträger sind, von denen die lokal aufeinanderfolgenden Pilotunterträger entfernt worden sind.

2. Verfahren nach Anspruch 1, wobei das Schätzen ein Schätzen der Phasensteigung ohne Mehrdeutigkeit bis zu $N / 2$ umfasst, wobei $N$ eine Anzahl von Basisbandabtastungen pro OFDM-Rahmen für das MU-MIMO OFDM-System ist.

3. Verfahren nach Anspruch 1 oder 2, wobei die Phasensteigung berechnet wird gemäß

$$\theta_{\mathrm{E}} = \frac{\sum_{i_{\mathrm{T}}=1}^{N_{\mathrm{T}}} \left| H_{\mathrm{E}}\left(i_{\mathrm{S}} + i_{\mathrm{T}} + 1\right)\right| \left| H_{\mathrm{E}}\left(i_{\mathrm{S}} + i_{\mathrm{T}}\right)\right| \angle \left( H_{\mathrm{E}}\left(i_{\mathrm{S}} + i_{\mathrm{T}} + 1\right) H_{\mathrm{E}}^{*}\left(i_{\mathrm{S}} + i_{\mathrm{T}}\right)\right)}{\sum_{i_{\mathrm{T}}=1}^{N_{\mathrm{T}}} \left| H_{\mathrm{E}}\left(i_{\mathrm{S}} + i_{\mathrm{T}} + 1\right)\right| \left| H_{\mathrm{E}}\left(i_{\mathrm{S}} + i_{\mathrm{T}}\right)\right|}$$

wobei is ein Index eines Unterträgers ist, der um eins kleiner ist als der niedrigste Index der lokal aufeinander-folgenden Pilotunterträger (300), $i_{\mathrm{T}}$ = 1, 2, ..., $N_{\mathrm{T}}$, und $N_{\mathrm{T}}$ die Anzahl der lokal aufeinanderfolgenden Pilotunterträger und größer oder gleich 2 ist; und,

wobei das Entfernen der Phasensteigung aus den geschätzten Kanalkoeffizienten an den Pilotunterträgern gemäß der folgenden Gleichung durchgeführt wird

$$G_{\mathrm{E}}\left(1 + \left(i_{\mathrm{P}} - 1\right)F\right) = H_{\mathrm{E}}\left(1 + \left(i_{\mathrm{P}} - 1\right)F\right)\exp\left(-j\theta_{\mathrm{E}}\left[1 + \left(i_{\mathrm{P}} - 1\right)F\right]\right),$$

wobei F eine ganze Zahl ist, die das Verhältnis der Anzahl der OFDM-Unterträger zu der Anzahl der Kamm-Pilot-Unterträger darstellt,
wobei $G_{\mathrm{E}}$ der geschätzte Kanalkoeffizient ist,
wobei $i_{\mathrm{P}}$ ein Index der lokal aufeinanderfolgenden Pilotunterträger (300) ist, und
wobei $H_{\mathrm{E}}$ der Kanalkoeffizient ist.

4. Verfahren nach einem der Ansprüche 1 bis 3, wobei das Interpolieren der von der Phasensteigung befreiten geschätzten Kanalkoeffizienten bei dem einen oder den mehreren verbleibenden Pilotunterträgern eine lineare Interpolation umfasst;

wobei die lineare Interpolation durchgeführt wird gemäß

$$G_{\mathrm{E}}\left(i_{\mathrm{F}}\right) = \frac{i_{\mathrm{F}} - 1 - \left(i_{\mathrm{P}} - 1\right)F}{F} G_{\mathrm{E}}\left(1 + i_{\mathrm{P}}F\right) + \frac{1 - i_{\mathrm{F}} + 1 + \left(i_{\mathrm{P}} - 1\right)F}{F} G_{\mathrm{E}}\left(1 + \left(i_{\mathrm{P}} - 1\right)F\right)$$

wobei 1 + $(i_{\mathrm{P}} - 1)F \leq i_{\mathrm{F}} < 1 + i_{p}F$; und
wobei das Verfahren das Anwenden der Phasensteigung auf die von der Phasensteigung befreiten geschätzten Kanalkoeffizienten bei dem einen oder den mehreren verbleibenden Pilotunterträgern umfasst gemäß

$$H_{\mathrm{E}}\left(i_{\mathrm{F}}\right) = G_{\mathrm{E}}\left(i_{\mathrm{F}}\right)\exp\left(j\theta_{\mathrm{E}}i_{\mathrm{F}}\right).$$

5. Verfahren nach einem der Ansprüche 1 bis 4, wobei die Empfangsvorrichtung (105) eine Benutzerendvorrichtung (120) oder ein Zugangspunkt (110) ist.

6. Verfahren nach Anspruch 5, wobei das Verfahren die Durchführung einer Uplink-Signalverarbeitung umfasst und Folgendes umfasst:

Interpolieren, durch den Zugangspunkt, unter Verwendung der von der Phasensteigung befreiten geschätzten Kanalkoeffizienten an den lokal aufeinanderfolgenden Pilotunterträgern, von der Phasensteigung befreiten geschätzten Kanalkoeffizienten an ausgewählten Pilotunterträgern eines Kanals;

Durchführen, durch den Zugangspunkt, einer Kanalinversion unter Verwendung der von der Phasensteigung befreiten geschätzten Kanalkoeffizienten an den ausgewählten Pilotunterträgern, um einen ersten Teil von Koeffizienten einer Kanalinversion an ersten Unterträgern des Kanals zu erhalten;

Interpolieren, durch den Zugangspunkt, eines verbleibenden Teils von Koeffizienten der Kanalinversion an allen Unterträgern außer den ersten Unterträgern des Kanals unter Verwendung des ersten Teils von Koeffizienten; und

Durchführen, durch den Zugangspunkt, einer Zero-Forcing-Erfassung bei OFDM-Datensymbolen, die von einer Benutzerendvorrichtung empfangen werden, unter Verwendung des ersten und des verbleibenden Teils der Koeffizienten der Kanalinversion.

7.  Empfangsvorrichtung (105) zum Schätzen von Kanalkoeffizienten von empfangenen Unterträgern für ein Mehrbenutzer-Mehrfacheingangs-Mehrfachausgangs-Orthogonal-Frequenzmultiplexsystem (MU-MIMO OFDM), die für Folgendes konfiguriert ist:

Verschieben mindestens eines Pilotunterträgers (200), um lokal aufeinanderfolgende Pilotunterträger (300) zu bilden;

Schätzen einer Phasensteigung unter Verwendung von Kanalkoeffizienten, die an den lokal aufeinanderfolgenden Pilotunterträgern (300) geschätzt werden;

Entfernen der Phasensteigung aus den geschätzten Kanalkoeffizienten an den lokal aufeinanderfolgenden Pilotunterträgern (300), um geschätzte Kanalkoeffizienten ohne Phasensteigung zu erhalten; und

Bestimmen von von der Phasensteigung befreiten geschätzten Kanalkoeffizienten eines oder mehrerer verbleibender Unterträger durch Interpolation unter Verwendung der von der Phasensteigung befreiten geschätzten Kanalkoeffizienten an den Pilotunterträgern, wobei der eine oder die mehreren verbleibenden Unterträger einer oder mehrere der empfangenen Unterträger sind, von denen die lokal aufeinanderfolgenden Pilotunterträger entfernt worden sind.

8.  Empfangsvorrichtung nach Anspruch 7, wobei die Empfangsvorrichtung (105) so konfiguriert ist, dass sie die Phasensteigung ohne Mehrdeutigkeit bis zu $N/2$ schätzt, wobei $N$ eine Anzahl von Basisbandabtastungen pro OFDM-Rahmen für das MU-MIMO OFDM-System ist.

9.  Empfangsvorrichtung nach Anspruch 7 oder 8, wobei die Empfangsvorrichtung (105) so konfiguriert ist, dass sie die Phasensteigung berechnet gemäß

$$\theta_{\mathrm{E}} = \frac{\sum_{i_{\mathrm{T}}=1}^{N_{\mathrm{T}}} \left| H_{\mathrm{E}}\left(i_{\mathrm{S}} + i_{\mathrm{T}} + 1\right) \right| \left| H_{\mathrm{E}}\left(i_{\mathrm{S}} + i_{\mathrm{T}}\right) \right| \angle \left( H_{\mathrm{E}}\left(i_{\mathrm{S}} + i_{\mathrm{T}} + 1\right) H_{\mathrm{E}}^{*}\left(i_{\mathrm{S}} + i_{\mathrm{T}}\right) \right)}{\sum_{i_{\mathrm{T}}=1}^{N_{\mathrm{T}}} \left| H_{\mathrm{E}}\left(i_{\mathrm{S}} + i_{\mathrm{T}} + 1\right) \right| \left| H_{\mathrm{E}}\left(i_{\mathrm{S}} + i_{\mathrm{T}}\right) \right|}$$

wobei is ein Index eines Unterträgers ist, der um eins kleiner ist als der niedrigste Index der lokal aufeinanderfolgenden Pilotunterträger 300, $i_{\mathrm{T}} = 1, 2, ..., N_{\mathrm{T}}$, und $N_{\mathrm{T}}$ die Anzahl der lokal aufeinanderfolgenden Pilotunterträger und größer oder gleich 2 ist; und,

wobei die Empfangsvorrichtung so konfiguriert ist, dass sie die Phasensteigung aus den geschätzten Kanalkoeffizienten an den Pilotunterträgern entfernt gemäß

$$G_{\mathrm{E}}\left(1 + \left(i_{\mathrm{P}} - 1\right)F\right) = H_{\mathrm{E}}\left(1 + \left(i_{\mathrm{P}} - 1\right)F\right) \exp\left(-j\theta_{\mathrm{E}}\left[1 + \left(i_{\mathrm{P}} - 1\right)F\right]\right),$$

wobei F eine ganze Zahl ist, die das Verhältnis der Anzahl der OFDM-Unterträger zu der Anzahl der Kamm-Pilot-Unterträger darstellt,

wobei $G_{\mathrm{E}}$ der geschätzte Kanalkoeffizient ist,

wobei $i_{\mathrm{p}}$ ein Index der lokal aufeinanderfolgenden Pilotunterträger (300) ist, und

wobei $H_{\mathrm{E}}$ der Kanalkoeffizient ist.

10.  Empfangsvorrichtung nach einem der Ansprüche 7 bis 9, wobei die Empfangsvorrichtung (105) so konfiguriert ist, dass sie die um die Phasensteigung bereinigten geschätzten Kanalkoeffizienten bei dem einen oder den mehreren verbleibenden Pilotunterträgern unter Verwendung linearer Interpolation interpoliert.

11. Empfangsvorrichtung nach Anspruch 10, wobei die Empfangsvorrichtung (105) so konfiguriert ist, dass sie eine lineare Interpolation durchführt gemäß

$$G_{\mathrm{E}}\left(i_{\mathrm{F}}\right) = \frac{i_{\mathrm{F}}-1-\left(i_{\mathrm{p}}-1\right)F}{F} G_{\mathrm{E}}\left(1+i_{\mathrm{p}}F\right) + \frac{1-i_{\mathrm{F}}+1+\left(i_{\mathrm{p}}-1\right)F}{F} G_{\mathrm{E}}\left(1+\left(i_{\mathrm{p}}-1\right)F\right)$$

wobei $1 + (i_P - 1)F \leq i_F < 1 + i_P F$; und,
wobei die Empfangsvorrichtung so konfiguriert ist, dass sie die Phasensteigung auf die von der Phasensteigung befreiten geschätzten Kanalkoeffizienten auf dem einen oder den mehreren verbleibenden Pilotunterträgern anwendet, gemäß

$$H_{\mathrm{E}}\left(i_{\mathrm{F}}\right) = G_{\mathrm{E}}\left(i_{\mathrm{F}}\right)\exp\left(j\theta_{\mathrm{E}}i_{\mathrm{F}}\right).$$

12. Empfangsvorrichtung nach einem der Ansprüche 7 bis 11, wobei die Empfangsvorrichtung (105) eine Benutzerendvorrichtung (120) oder ein Zugangspunkt (110) ist.

**Revendications**

1. Procédé effectué par un dispositif de réception servant à estimer les coefficients de canal de sous-porteuses reçues pour un système MU-MIMO OFDM (multi-user multiple-input multiple-output orthogonal frequency division multiplexing - multiplexage par répartition orthogonale de la fréquence, à entrées multiples et sorties multiples à utilisateurs multiples), comprenant les étapes consistant à :

   décaler des, au moins une, sous-porteuses pilotes (200) pour former des sous-porteuses pilotes localement consécutives (300) ;
   estimer une pente de phase en utilisant les coefficients de canal estimés au niveau des sous-porteuses pilotes localement consécutives (300) ;
   supprimer la pente de phase des coefficients de canal estimés au niveau des sous-porteuses pilotes localement consécutives (300) afin d'obtenir des coefficients de canal estimés à pente de phase supprimée ; et
   déterminer les coefficients de canal estimés à pente de phase supprimée d'une ou de plusieurs sous-porteuses restantes par interpolation en utilisant les coefficients de canal estimés à pente de phase supprimée au niveau des sous-porteuses pilotes, dans lequel lesdites une ou plusieurs sous-porteuses restantes sont une ou plusieurs des sous-porteuses reçues desquelles les sous-porteuses pilotes localement consécutives ont été supprimées.

2. Procédé selon la revendication 1, dans lequel ladite étape consistant à estimer comporte l'étape consistant à estimer la pente de phase sans ambiguïté jusqu'à $N / 2$, où $N$ est un nombre d'échantillons de bande de base par trame OFDM pour le système MU-MIMO OFDM.

3. Procédé selon la revendication 1 ou la revendication 2, dans lequel la pente de phase est calculée selon

$$\theta_{\mathrm{E}} = \frac{\sum_{i_{\mathrm{T}}=1}^{N_{\mathrm{T}}} \left|H_{\mathrm{E}}\left(i_{\mathrm{S}}+i_{\mathrm{T}}+1\right)\right|\left|H_{\mathrm{E}}\left(i_{\mathrm{S}}+i_{\mathrm{T}}\right)\right| \angle \left(H_{\mathrm{E}}\left(i_{\mathrm{S}}+i_{\mathrm{T}}+1\right)H_{\mathrm{E}}^{*}\left(i_{\mathrm{S}}+i_{\mathrm{T}}\right)\right)}{\sum_{i_{\mathrm{T}}=1}^{N_{\mathrm{T}}} \left|H_{\mathrm{E}}\left(i_{\mathrm{S}}+i_{\mathrm{T}}+1\right)\right|\left|H_{\mathrm{E}}\left(i_{\mathrm{S}}+i_{\mathrm{T}}\right)\right|}$$

où $i_S$ est un indice de sous-porteuse un de moins que l'indice le plus bas des sous-porteuses pilotes localement consécutives (300), $i_T = 1, 2, ..., N_T$, et $N_T$ est le nombre de sous-porteuses pilotes localement consécutives et supérieur ou égal à 2 ; et,

dans lequel l'étape consistant à supprimer la pente de phase des coefficients de canal estimés au niveau des sous-porteuses pilotes est effectuée selon

$$G_{\mathrm{E}}\left(1+\left(i_{\mathrm{P}}-1\right)F\right)=H_{\mathrm{E}}\left(1+\left(i_{\mathrm{P}}-1\right)F\right)\exp\left(-j\theta_{\mathrm{E}}\left[1+\left(i_{\mathrm{P}}-1\right)F\right]\right),$$

dans lequel F est un entier représentant le rapport entre le nombre de sous-porteuses OFDM et le nombre de sous-porteuses pilotes en peigne,
dans lequel $G_{\mathrm{E}}$ est le coefficient de canal estimé,
dans lequel $i_{\mathrm{p}}$ est un indice des sous-porteuses pilotes localement consécutives (300), et
dans lequel $H_{\mathrm{E}}$ est le coefficient de canal.

4. Procédé selon l'une quelconque des revendications 1 à 3, dans lequel l'interpolation des coefficients de canal estimés à pente de phase supprimée au niveau desdites une ou plusieurs sous-porteuses pilotes restantes comprend une interpolation linéaire ;

dans lequel l'interpolation linéaire est effectuée selon

$$G_{\mathrm{E}}\left(i_{\mathrm{F}}\right)=\frac{i_{\mathrm{F}}-1-\left(i_{\mathrm{P}}-1\right)F}{F}G_{\mathrm{E}}\left(1+i_{\mathrm{P}}F\right)+\frac{1-i_{\mathrm{F}}+1+\left(i_{\mathrm{P}}-1\right)F}{F}G_{\mathrm{E}}\left(1+\left(i_{\mathrm{P}}-1\right)F\right)$$

où $1 + (i_p - 1)F \leq i_{\mathrm{F}} < 1 + i_pF$; et
dans lequel le procédé comprend l'étape consistant à appliquer la pente de phase aux coefficients de canal estimés à pente de phase supprimée au niveau desdites une ou plusieurs sous-porteuses pilotes restantes selon

$$H_{\mathrm{E}}\left(i_{\mathrm{F}}\right)=G_{\mathrm{E}}\left(i_{\mathrm{F}}\right)\exp\left(j\theta_{\mathrm{E}}i_{\mathrm{F}}\right).$$

5. Procédé selon l'une quelconque des revendications 1 à 4, dans lequel le dispositif de réception (105) est un terminal d'utilisateur (120) ou un point d'accès (110).

6. Procédé selon la revendication 5, dans lequel le procédé comprend l'étape consistant à effectuer un traitement de signal de liaison montante comprenant les étapes consistant à :

interpoler, par le point d'accès, en utilisant les coefficients de canal estimés à pente de phase supprimée au niveau des sous-porteuses pilotes localement consécutives, les coefficients de canal estimés à pente de phase supprimée au niveau des sous-porteuses pilotes sélectionnées d'un canal ;
effectuer, par le point d'accès, une inversion de canal en utilisant les coefficients de canal estimés à pente de phase supprimée au niveau des sous-porteuses pilotes sélectionnées afin d'obtenir une première partie des coefficients d'une inversion de canal au niveau des premières sous-porteuses du canal ;
interpoler, par le point d'accès, une partie restante des coefficients de l'inversion de canal au niveau de toutes les sous-porteuses sauf les premières sous-porteuses du canal en utilisant la première partie des coefficients ; et
effectuer, par le point d'accès, une détection de forçage à zéro sur des symboles de données OFDM reçus en provenance d'un terminal d'utilisateur en utilisant la première partie et les parties restantes des coefficients de l'inversion de canal.

7. Dispositif de réception (105) servant à estimer les coefficients de canal de sous-porteuses reçues pour un système MU-MIMO OFDM (multi-user multiple-input multiple-output orthogonal frequency division multiplexing - multiplexage par répartition orthogonale de la fréquence, à entrées multiples et sorties multiples à utilisateurs multiples), configuré pour :

décaler des, au moins une, sous-porteuses pilotes (200) pour former des sous-porteuses pilotes localement consécutives (300) ;
estimer une pente de phase en utilisant les coefficients de canal estimés au niveau des sous-porteuses pilotes localement consécutives (300) ;
supprimer la pente de phase des coefficients de canal estimés au niveau des sous-porteuses pilotes localement consécutives (300) afin d'obtenir des coefficients de canal estimés à pente de phase supprimée ; et déterminer les coefficients de canal estimés à pente de phase supprimée d'une ou de plusieurs sous-porteuses restantes par interpolation en utilisant les coefficients de canal estimés à pente de phase supprimée au niveau des sous-porteuses pilotes, dans lequel lesdites une ou plusieurs sous-porteuses restantes sont une ou plusieurs des sous-porteuses reçues desquelles les sous-porteuses pilotes localement consécutives ont été supprimées.

8.  Dispositif de réception selon la revendication 7, dans lequel le dispositif de réception (105) est configuré pour estimer la pente de phase sans ambiguïté jusqu'à $N/2$, où $N$ est un nombre d'échantillons de bande de base par trame OFDM pour le système MU-MIMO OFDM.

9.  Dispositif de réception selon la revendication 7 ou la revendication 8, dans lequel le dispositif de réception (105) est configuré pour calculer la pente de phase selon

$$\theta_E = \frac{\sum_{i_T=1}^{N_T} \left|H_E\left(i_S + i_T + 1\right)\right|\left|H_E\left(i_S + i_T\right)\right| \angle \left(H_E\left(i_S + i_T + 1\right) H_E^*\left(i_S + i_T\right)\right)}{\sum_{i_T=1}^{N_T} \left|H_E\left(i_S + i_T + 1\right)\right|\left|H_E\left(i_S + i_T\right)\right|}$$

où is est un indice de sous-porteuse un de moins que l'indice le plus bas des sous-porteuses pilotes localement consécutives 300, $i_T$ = 1, 2, ..., $N_T$, et $N_T$ est le nombre de sous-porteuses pilotes localement consécutives et supérieur ou égal à 2 ; et,
dans lequel le dispositif de réception est configuré pour supprimer la pente de phase des coefficients de canal estimés au niveau des sous-porteuses pilotes selon

$$G_E\left(1 + \left(i_P - 1\right)F\right) = H_E\left(1 + \left(i_P - 1\right)F\right)\exp\left(-j\theta_E\left[1 + \left(i_P - 1\right)F\right]\right),$$

dans lequel F est un entier représentant le rapport entre le nombre de sous-porteuses OFDM et le nombre de sous-porteuses pilotes en peigne,
dans lequel $G_E$ est le coefficient de canal estimé,
dans lequel $i_p$ est un indice des sous-porteuses pilotes localement consécutives (300), et
dans lequel $H_E$ est le coefficient de canal.

10. Dispositif de réception selon l'une quelconque des revendications 7 à 9, dans lequel le dispositif de réception (105) est configuré pour interpoler les coefficients de canal estimés à pente de phase supprimée au niveau desdites une ou plusieurs sous-porteuses pilotes restantes en utilisant une interpolation linéaire.

11. Dispositif de réception selon la revendication 10, dans lequel le dispositif de réception (105) est configuré pour effectuer une interpolation linéaire selon

$$G_E\left(i_F\right) = \frac{i_F - 1 - \left(i_P - 1\right)F}{F} G_E\left(1 + i_P F\right) + \frac{1 - i_F + 1 + \left(i_P - 1\right)F}{F} G_E\left(1 + \left(i_P - 1\right)F\right)$$

où $1 + (i_P - 1)F \leq i_F < 1 + i_P F$; et,
dans lequel le dispositif de réception est configuré pour appliquer la pente de phase aux coefficients de canal estimés à pente de phase supprimée au niveau desdites une ou plusieurs sous-porteuses pilotes restantes selon

$$H_E\left(i_F\right) = G_E\left(i_F\right)\exp\left(j\theta_E i_F\right).$$

12. Dispositif de réception selon l'une quelconque des revendications 7 à 11, dans lequel le dispositif de réception (105) est un terminal d'utilisateur (120) ou un point d'accès (110).

**FIGURE 1**

FIGURE 2

FIGURE 3

400

Estimate channel coefficients at pilot sub-carriers — 410

Estimate a phase slope using the estimated channel coefficients at locally consecutive pilot sub-carriers — 420

Remove phase slope from the channel coefficients at the pilot sub-carriers to obtain phase slope removed channel coefficients — 425

Determine the channel coefficients of one or more remaining sub-carriers by interpolation using the phase slope removed channel coefficients at the pilot sub-carriers — 430

## FIGURE 4

**FIGURE 5A**

**FIGURE 5B**

**600**

```
┌─────────────────────┐
│  Estimate channel   │
│  coefficients at comb-│     610
│  pilot sub-carriers │
│  including locally  │
│ consecutive pilot sub-│
│      carriers       │
└─────────────────────┘
          │
          ▼
┌─────────────────────┐
│  Estimate the phase │
│  slope by using the │
│  estimated channel  │     620
│  coefficients at the│
│  locally consecutive│
│  pilot sub-carriers │
└─────────────────────┘
          │
          ▼
┌─────────────────────┐
│  Remove the phase   │
│  slope from the     │
│  estimated channel  │     630
│ coefficients at the pilot│
│     sub-carriers    │
└─────────────────────┘
          │
          ▼
┌─────────────────────┐
│                     │
│ Perform interpolation to│
│  estimate the channel│     640
│   coefficients at   │
│ remaining sub-carriers│
│                     │
└─────────────────────┘
          │
          ▼
┌─────────────────────┐
│ Apply the phase slope│
│  to the estimated   │     650
│ coefficients at the pilot│
│     sub-carriers    │
└─────────────────────┘
```

# FIGURE 6

700

User terminal obtains
channel feedback data — 705

User terminal performs
DCT of the channel
feedback data — 710

User terminal quantises
the DCT channel
feedback data — 715

User terminal transfers
the quantised DCT
channel feedback data
to the access point — 720

Access point performs
IDCT of the quantised
DCT channel feedback
data to obtain channel
feedback data — 725

FIGURE 7A

750

| User terminal obtains estimated frequency domain channel coefficients at sub-carriers | 755 |

| User terminal performs DCT of the estimated frequency domain channel coefficients to obtain DCT coefficients | 760 |

| User terminal quantises the DCT channel coefficients | 765 |

| User terminal transfers the quantised DCT channel coefficients to the access point | 770 |

| Access point performs IDCT of the quantised DCT channel coefficients to obtain frequency domain channel coefficients | 775 |

FIGURE 7B

**FIGURE 8**

**FIGURE 9**

DCT

FIGURE 10

DFT

FIGURE 11

**1200**

```
Determine, using a OFDM training symbol,
phase slope removed channel coefficients        1210
for the user terminal
```

```
Interpolating phase slope removed channel
coefficients at channel inverse sub-carriers    1215
```

```
Perform channel inversion at the channel
inverse sub-carriers to obtain an initial       1220
portion of elements of a channel inverse
```

```
Perform interpolation of a remaining
portion of the channel inverse by directly
interpolating the initial portion of elements   1230
of the channel inverse
```

## FIGURE 12

**1300**

Receive phase slope removed channel
coefficients from the user terminal  ·  1310

Interpolate phase slope removed channel
coefficients at channel inverse sub-carriers
using the received phase slope removed
channel coefficients  ·  1320

Perform channel inversion at channel
inverse sub-carriers to determine an initial
portion of elements of a channel inverse  ·  1330

Perform interpolation of a remaining
portion of the channel inverse by directly
interpolating the initial portion of elements
of the channel inverse  ·  1340

# FIGURE 13

FIGURE 14

**1500**

```
┌─────────────────────────┐
│ User terminal transmits  │
│ channel training OFDM    │  1505
│ symbols from the user    │
│ terminal to access point │
└─────────────────────────┘
              │
              ▼
┌─────────────────────────┐
│ Access point estimates   │
│ frequency domain channel │  1510
│ coefficients at the comb-│
│ pilot sub-carriers       │
└─────────────────────────┘
              │
              ▼
┌─────────────────────────┐
│ Access point estimates   │
│ phase slope for user     │
│ terminal using the       │
│ estimated channel        │  1515
│ coefficients obtained    │
│ for locally consecutive  │
│ pilot sub-carriers       │
└─────────────────────────┘
              │
              ▼
┌─────────────────────────┐
│ Access point removes the │
│ phase slope from         │  1520
│ estimated channel        │
│ coefficient values       │
└─────────────────────────┘
              │
              ▼
┌─────────────────────────┐
│ Access point interpolates│
│ phase slope removed      │  1525
│ channel coefficients at  │
│ channel inverse          │
│ sub-carriers             │
└─────────────────────────┘
```

```
┌─────────────────────────┐
│ Access point performs    │
│ channel inversion at the │
│ channel inverse          │  1530
│ sub-carriers to obtain   │
│ an initial portion of    │
│ a channel inverse        │
└─────────────────────────┘
              │
              ▼
┌─────────────────────────┐
│ Access point performs    │
│ interpolation of a       │
│ remaining portion of     │
│ the channel inverse by   │  1535
│ directly interpolating   │
│ the initial portion of   │
│ elements of the channel  │
│ inverse                  │
└─────────────────────────┘
              │
              ▼
┌─────────────────────────┐
│ User terminal transmits  │
│ data OFDM symbols to     │  1540
│ access point             │
└─────────────────────────┘
              │
              ▼
┌─────────────────────────┐
│ Access point performs    │
│ zero-forcing detection   │
│ using the interpolated   │  1545
│ channel inverse at each  │
│ sub-carrier              │
└─────────────────────────┘
              │
              ▼
┌─────────────────────────┐
│ Access point applies     │
│ user specific phase      │
│ slope on the             │  1550
│ reconstructed            │
│ transmitted symbols      │
└─────────────────────────┘
```

**FIGURE 15**

FIGURE 16

40

1700

```
┌─────────────────────┐
│ Access point transmits │  1705
│ channel training OFDM │
│ symbols to user terminal │
└─────────────────────┘
          │
          ▼
┌─────────────────────┐
│ User terminal estimates │
│ frequency domain channel │  1710
│ coefficients at comb-pilot │
│ sub-carriers │
└─────────────────────┘
          │
          ▼
┌─────────────────────┐
│ User terminal estimates phase │
│ slope from the estimated │
│ frequency domain channel │  1715
│ coefficients at the locally │
│ consecutive pilot sub-carriers │
└─────────────────────┘
          │
          ▼
┌─────────────────────┐
│ User terminal removes │
│ phase slope from the │
│ frequency domain channel │  1720
│ coefficients at comb-pilot │
│ sub-carriers │
└─────────────────────┘
          │
          ▼
┌─────────────────────┐
│ User terminal performs interpolation │
│ of phase slope removed channel │
│ coefficients at sub-carriers used for │ 1725
│ phase slope estimation for all access │
│ point antennas │
└─────────────────────┘
          │
          ▼
┌─────────────────────┐
│ User terminal performs DCT │
│ compression of phase slope │
│ removed channel coefficients for │  1730
│ assigned sub-channels │
└─────────────────────┘
          │
          ▼
┌─────────────────────┐
│ User terminal performs DCT │
│ coefficient quantisation for │  1735
│ each assigned sub-channel │
└─────────────────────┘
          │
          ▼
┌─────────────────────┐
│ User terminal provides │
│ quantised DCT coefficients │  1740
│ to access point in uplink │
│ data symbols │
└─────────────────────┘
```

```
┌─────────────────────┐
│ Access point performs IDCT │
│ to restore freq domain │
│ phase slope removed │  1745
│ channel coefficients at │
│ comb-pilot sub-carriers │
└─────────────────────┘
          │
          ▼
┌─────────────────────┐
│ Access point performs │
│ interpolation on freq domain │
│ channel coefficients to obtain │  1750
│ channel matrix estimates at │
│ channel inverse sub-carriers │
└─────────────────────┘
          │
          ▼
┌─────────────────────┐
│ Access point performs channel │
│ inversion at channel inverse │  1755
│ sub-carriers to obtain initial │
│ portion of the channel matrix │
└─────────────────────┘
          │
          ▼
┌─────────────────────┐
│ Access point performs │
│ interpolation of a remaining │
│ portion of the channel inverse │  1760
│ to produce the channel │
│ inverse at all sub-carriers │
└─────────────────────┘
          │
          ▼
┌─────────────────────┐
│ Access point transmits to │
│ user terminal channel │
│ training OFDM symbol pre- │  1765
│ coded by the channel │
│ inverse │
└─────────────────────┘
          │
          ▼
┌─────────────────────┐
│ User terminal performs │
│ channel estimation using │
│ the pre-coded channel │  1770
│ training OFDM symbol │
└─────────────────────┘
          │
          ▼
┌─────────────────────┐
│ Access point transmits, to │
│ user terminal, data OFDM │
│ symbols pre-coded by the │  1775
│ channel inverse │
└─────────────────────┘
          │
          ▼
┌─────────────────────┐
│ User terminal performs zero- │
│ forcing detection using the │  1780
│ estimated pre-coded │
│ channel │
└─────────────────────┘
```

FIGURE 17

**FIGURE 18**

FIGURE 19A

FIGURE 19B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016064901 A1
- US 8938015 B2